# EUROPEAN PATENT SPECIFICATION

(11) **EP 2 345 679 B1**
(45) Date of publication and mention of the grant of the patent: **27.04.2016**
(21) Application number: 09817867.6
(22) Date of filing: 01.10.2009
(51) Int. Cl.: C08F 279/02, B60C 1/00, B60C 5/14, C08F 2/38, C08F 253/00, C08K 3/00, C08K 5/54, C08L 51/04

(54) **METHOD FOR PRODUCING GRAFT COPOLYMER, GRAFT COPOLYMER OBTAINED BY THE METHOD, RUBBER COMPOSITION CONTAINING THE GRAFT COPOLYMER, AND TIRE**
VERFAHREN ZUR HERSTELLUNG EINES PFROPFCOPOLYMERS, IN DIESEM VERFAHREN GEWONNENES PFROPFCOLYMER, GUMMIZUSAMMENSETZUNG MIT DEM PFROPFCOPOLYMER UND REIFEN
PROCÉDÉ DE FABRICATION DE POLYMÈRE GREFFÉ, POLYMÈRE GREFFÉ OBTENU GRÂCE À CE PROCÉDÉ, ET COMPOSITION DE CAOUTCHOUC ET PNEUMATIQUE COMPRENANT LEDIT POLYMÈRE GREFFÉ

(30) Priority: 02.10.2008 JP 2008257659
(43) Date of publication of application: 20.07.2011
(73) Proprietor: Bridgestone Corporation, Tokyo 104-8340 (JP); Otsuka Chemical Holdings Co., Ltd., Osaka-shi, Osaka 540-0021 (JP)
(72) Inventor: MORI, Noriko, Kodaira-shi Tokyo 187-8531 (JP); KONDO, Hajime, Kodaira-shi Tokyo 187-8531 (JP); KAMESHIMA, Takashi, Tokushima-shi Tokushima 771-0193 (JP)
(74) Representative: Oxley, Robin John George
(86) International application number: PCT/JP2009/067178
(87) International publication number: WO 2010/038835

(56) References cited:
- WO-A1-2004/014848
- WO-A1-2004/014962
- JP-A- 7 164 821
- JP-A- 2005 290 024
- JP-A- 2006 152 117
- JP-A- 2006 225 524
- JP-A- 2007 204 540
- JP-T- 2006 512 459

## Description

### Technical Field

The present invention relates to a method of efficiently producing a graft copolymer (modified rubber polymer) latex, the method involving subjecting, in particular, a functional group-containing vinyl-based monomer to graft polymerization with a natural rubber and/or a synthetic diene-based rubber in an aqueous medium by living radical polymerization, a rubber composition containing a graft copolymer obtained from the above-mentioned latex and excellent in, for example, low heat generating property, wear resistance, and fracture characteristic, and a tire obtained by using the rubber composition in any one of its tire members and having the above-mentioned properties.

### Background Art

Requests for improvements in fuel efficiency of automobiles have started to become more and more stringent in recent years in relation to a global trend toward restrictions on the emission of carbon dioxide in association with social demands for energy savings and growing interests in environmental problems. In order that tire performance may also be ready for such requests, a reduction in rolling resistance has started to be requested. Although investigations have been conducted on approaches based on the optimization of tire structures as approaches to reducing the rolling resistances of tires, the use of a material that generates a reduced quantity of heat as a rubber composition has been adopted as the most general approach.

A large number of technologies related to modified rubbers for rubber compositions each using silica or carbon black as a filler have been developed so far in order that such rubber composition that generates a small quantity of heat as described above may be obtained. Of those, in particular, a method involving modifying a polymerization active terminal of a conjugated diene-based polymer, which is obtained by anionic polymerization involving the use of an organic lithium, with an alkoxysilane derivative containing a functional group that interacts with any such filler has been proposed as an effective method (see, for example, Patent Literature 1 or 2).

However, most of those technologies are applied to polymers in each of which the living property of a polymer terminal can be easily secured, and a sufficient modifying effect in a rubber composition blended with silica or carbon black has not been necessarily obtained. In addition, most of the conventional modifying approaches do not allow one to provide a main chain with a sufficient number of branches. Accordingly, when the approaches are put into practical use, a cold flow manifests itself as a large stumbling block. In addition, the performance of partial coupling to cope with the cold flow has involved such a problem that a modifying effect ineluctably reduces.

By the way, living polymerization is such polymerization that a growth reaction progresses but neither a termination reaction nor a chain transfer reaction occurs. The growth terminals of a living polymer each maintain its activity even after a monomer has been consumed, and the addition of the monomer results in the restart of the polymerization. The molecular weight of the polymer increases in proportion to the consumption of the monomer, and as a result, polymer molecules having a uniform molecular weight can be obtained. In addition, various functional groups can be easily introduced into the active terminals of the polymer. The living polymerization can be realized with relative ease in each of anionic polymerization and cationic polymerization.

Meanwhile, radical polymerization is a polymerization method of extreme importance in industry, and has such an advantage that the introduction of a large number of polar monomers that cannot be achieved by anionic polymerization can be achieved. However, the living polymerization has been conventionally considered to be impossible because the lifetime of a growth radical is extremely short and a polymerization-terminating mechanism not observed in ionic polymerization such as a bimolecular termination reaction exists. Since the discovery of a radical that is stable even in the presence of air such as a 2, 2, 6, 6-tetramethylpiperidinyl-1-oxy radical in recent years, however, active researches have started on living radical polymerization. In the living radical polymerization, the bonding (gelation) of polymer molecules caused by ordinary radical polymerization can be suppressed, and a polar monomer graft can be introduced into a copolymer. It should be noted that when a polymer having a large amount of gel is used in a rubber composition, the fracture characteristic of the composition remarkably reduces.

In addition, in the case where polar groups are introduced into side chains by graft polymerization, the mobility of each of the polar groups can be improved, and the number of the polar groups to be introduced can be increased as compared with the case where the polar groups are introduced into a main chain. Therefore, when the resultant is used in the rubber composition, an affinity for carbon black or an inorganic filler is significantly improved.

Such living radical polymerization has, for example, the following advantages. The molecular weight of a polymer to be obtained can be easily controlled, the polymer has a narrow molecular weight distribution and its terminals can be modified, and assorted functional groups can be introduced into the terminals.

Disclosed concerning the living radical polymerization have been, for example, (1) a method of producing an aqueous liquid containing a polymer, the method involving polymerizing a vinyl monomer in an aqueous medium with a specific organotellurium compound, a surfactant, and/or a dispersant (see, for example, Patent Literature 3), and (2) a method of producing a living radical polymer, the method involving polymerizing a vinyl monomer with a living radical polymerization initiator formed of a specific organotellurium compound and with a mixture of a living radical polymer obtained by polymerizing the vinyl monomer (macro living radical polymerization initiator) and a specific organoditelluride compound (see, for example, Patent Literature 4).

Further disclosed as polymerization in the presence of a polymerization control agent (living polymerization) has been an emulsion polymerization method including: [1] preparing an aqueous polymerization medium containing (a) at least one kind of monomer, and (b) the polymerization control agent and an emulsifier, the emulsifier being produced in the aqueous polymerization medium on the spot; and [2] initiating the polymerization of the monomer in the aqueous polymerization medium (see, for example, Patent Literature 5).

However, no examples in which a radically polymerizable monomer is subjected to living radical graft polymerization with a natural rubber or a synthetic diene-based rubber in an aqueous medium by applying such technology have been known.

[PTL 1] JP 06-53763 B
[PTL 2] JP 06-57767 B
[PTL 3] JP 2006-225524 A
[PTL 4] JP 2006-299278 A
[PTL 5] JP 2006-512459 A

### Summary of Invention

### Technical Problem

In view of such circumstances, an object of the present invention is to provide a method of efficiently producing a graft copolymer, the method including subjecting a radically polymerizable monomer, in particular, a functional group-containing radically polymerizable monomer to living radical graft polymerization with a natural rubber, a rubber composition containing a graft copolymer obtained by the method and excellent in, for example, low heat generating property, wear resistance, and fracture characteristic, and a tire obtained by using the rubber composition in any one of its tire members and having the above-mentioned properties.

The inventors of the present invention have made extensive studies to achieve the object, and as a result, have found the following facts:
(1) in the case where living radical graft polymerization is performed by emulsion polymerization in an aqueous system, a polymer having a higher degree of polymerization than that in the case of polymerization in an organic solvent can be produced, and a polymer having a longer graft portion than that in the case of the latter polymerization can be produced;
(2) in order that living radical polymerization, which is performed in the presence of a polymerization control agent, may be performed in the aqueous system, the polymerization control agent is preferably inert to water;
(3) the above-mentioned polymerization control agent is preferably, for example, a stable free radical-forming compound, an atom transfer radical polymerization agent, a reversible addition-fragmentation chain transfer agent, an iniferter, an organotellurium compound, or an organoiodine compound, and is particularly suitably an organotellurium compound;
(4) a radically polymerizable monomer to be grafted is preferably a monomer having a functional group in a molecule thereof, and the selection of the functional group improves the dispersibility of carbon black or an inorganic filler in a rubber composition containing a graft copolymer to be obtained and makes the composition excellent in, for example, low heat generating property, wear resistance, and fracture characteristic; and
(5) a tire excellent in, for example, low heat generating property, wear resistance, and fracture characteristic can be obtained by using the above-mentioned rubber composition in any one of its tire members.

The present invention has been completed on the basis of such findings.

That is, the present invention provides the following:
(1) a method of producing a graft copolymer, the method comprising subjecting a radically polymerizable monomer to living radical graft polymerization with a rubber component formed of a natural rubber in an aqueous medium in the presence of a polymerization control agent;
(2) a graft copolymer latex obtained by the method according to the above-mentioned section (1);
(3) a graft copolymer obtained by coagulating and drying the graft copolymer latex according to the above-mentioned section (2);
(4) a rubber composition, including the graft copolymer according to the above-mentioned section (3);
(5) the rubber composition according to the above-mentioned section comprising:
   (A) a rubber component containing the graft copolymer; and
   (B) carbon black and/or an inorganic filler at a ratio of 5 to 100 parts by mass based on 100 parts by mass of the rubber component;
(6) the rubber composition according to the above-mentioned section (5) further comprising a silane coupling agent at a ratio of 1 to 20 mass% based on the inorganic filler; and
(7) a tire using the rubber composition according to any one of the above-mentioned sections (4) to (6) in any one of tire members thereof.

The method of producing a graft copolymer, rubber composition, and tire of the present invention exert the following effects.
(1) According to the method of producing a graft copolymer of the present invention, a graft copolymer (modified rubber polymer) latex can be efficiently produced by subjecting the radically polymerizable monomer to graft polymerization with the natural rubber (optionally together with synthetic diene-based rubber) in the aqueous medium by the living radical polymerization.
   In particular, in the case where the living radical polymerization is performed by emulsion polymerization in an aqueous system (polymerization in a micelle (organic solvent), or on the surface of the micelle, in the aqueous medium), a polymer having a higher degree of polymerization than that in the case of polymerization in an organic solvent can be produced, a polymer having a longer graft portion than that in the case of the latter polymerization can be produced, and a gel content (toluene insoluble content) reduces as compared with the latter polymerization.
(2) The graft copolymer latex of the above-mentioned section (1) can be produced more effectively by using a polymerization control agent that is inert to water, in particular, an organotellurium compound having a specific structure as the polymerization control agent to be used upon performance of the living radical graft polymerization. The organotellurium compound has not only good stability in the aqueous system but also molecular weight controllability, functional group adaptability, the ease with which a terminal of a living polymer is modified, and the like.
(3) When a monomer having a functional group in a molecule thereof is used as the radically polymerizable monomer to be grafted and the functional group is selected, the graft copolymer to be obtained can excellently interact with carbon black or an inorganic filler in a rubber composition, and can be made suitable as a rubber component for a rubber composition.
(4) The dispersibility of carbon black or an inorganic filler in a rubber composition containing the graft copolymer of the above-mentioned section (3) is good, and the rubber composition is excellent in low heat generating property, wear resistance, and fracture characteristic.
(5) A tire excellent in, for example, low heat generating property, wear resistance, and fracture characteristic can be obtained by using the rubber composition of the above-mentioned section (4) in any one of its tire members.

### Description of Embodiments

First, a method of producing a graft copolymer of the present invention is described.

### [Method of producing graft copolymer]

The method of producing a graft copolymer of the present invention (which may hereinafter be simply referred to as "method of the present invention") is characterized by including subjecting a radically polymerizable monomer to living radical graft polymerization with a rubber component formed of a natural rubber (optionally together with a synthetic diene-based rubber) in an aqueous medium in the presence of a polymerization control agent.

### (Raw material rubber component)

In the method of producing a graft copolymer of the present invention, the natural rubber (optionally with the synthetic diene-based rubber) is used as a raw material rubber component to which the monomer is to be grafted. The above-mentioned raw material rubber component is preferably used in a latex form because the living radical graft polymerization in the present invention is performed in the aqueous medium and is preferably emulsion polymerization.

The latex of the natural rubber is not particularly limited, and for example, a field latex, an ammonia-treated latex, a centrifugally concentrated latex, a deproteinized latex treated with a surfactant or enzyme, or a combination of two or more thereof can be used. On the other hand, the latex of the synthetic diene-based rubber is not particularly limited, and for example, a butadiene rubber (BR) latex, an isoprene rubber (IR) latex, a styrene-butadiene copolymer rubber (SBR) latex, or a nitrile rubber (NBR) latex can be used.

The origin of the latex of the above-mentioned synthetic diene-based rubber is not particularly limited, and any one of, for example, a product obtained by emulsion polymerization, a product obtained by dispersing a solution polymerized product in an aqueous medium, and a product obtained by turning a solid rubber into a latex through dissolution and emulsification is permitted.

In the present invention, one kind of the respective latices may be used alone, or two or more kinds thereof may be used in combination.

### (Polymerization control agent)

In the method of the present invention, a graft chain is introduced into a side chain of the rubber component by performing the living radical graft polymerization while causing the polymerization control agent to exist in a reaction system. In this case, the polymerization becomes living radical polymerization by virtue of the presence of the above-mentioned polymerization control agent, and a living polymer whose terminals are active is introduced as the above-mentioned graft chain.

The above-mentioned polymerization control agent is not particularly limited, and an arbitrary agent can be appropriately selected from compounds conventionally known as polymerization control agents in the living radical polymerization. In the present invention, an agent that is inert to water, i.e., an agent that is not deactivated by the presence of water is preferred because the living radical graft polymerization is requested to be performed in the aqueous medium.

In the method of the present invention, examples of the polymerization control agent to be used for living radical graft polymerization may include a stable free radical-forming compound, an atom transfer radical polymerization agent, a reversible addition-fragmentation chain transfer agent, an iniferter, an organotellurium compound, and an organoiodine compound. From the viewpoint of reactivity, a stable free radical-forming compound, an iniferter, and an organotellurium compound are preferred. Of those, an organotellurium compound is particularly preferred from the viewpoint of stability in an aqueous system.

### <Stable free radical-forming compound>

The stable free radical-forming compound is a compound that forms a stable free radical such as a nitroxy radical (R₂N-O·) to advance the living radical polymerization by an action of the radical. Radical polymerization by the action of the nitroxy radical is called NMP.

The nitroxy radical serving as a stable free radical is preferably a nitroxy radical from a cyclic hydroxy amine such as a 2,2,6,6-substituted-1-piperidinyloxy radical or a 2,2,5, 5-substituted-1-pyrrolidinyloxy radical. It shouldbe noted that an alkyl group having 4 or less carbon atoms such as a methyl group or an ethyl group is a suitable substituent. For example, phenyl-t-butylnitrone is given. In addition, for example, 1-diphenylethylene has been known as a compound that forms a stable free radical except the nitroxy radical.

In the living radical polymerization by the action of the stable free radical, a growth species intermittently has activity by virtue of a rapid cycle of the dissociation, growth, and bond formation of a weak bond of a polymer growth terminal, and bimolecular termination and deactivation due to chain transfer are suppressed.

### <Atom transfer radical polymerization agent>

Atom transfer radical polymerization (ATRP) involving the use of the atom transfer radical polymerization agent as a polymerization control agent is a catalyst reversible redox method by which the living radical polymerization is performed through the intermediation of easy transfer of an instable radical between a growing polymer chain and the polymerization control agent.

For example, a combination of an organic halide and a transition metal complex can be used as the atom transfer radical polymerization agent. Suitable as the above-mentioned organic halide is, for example, a compound having a carbon-halogen bond with particularly high reactivity (such as a carbonyl compound having a halogen at an α-position or a compound having a halogen at a benzyl position) or a halogenated sulfonyl compound.

Meanwhile, the transition metal complex, which is not particularly limited, is preferably a metal complex using an element belonging to any one of Groups 7 to 11 of the periodic table as a central metal, more preferably a complex of zero-valent or monovalent copper, divalent ruthenium, divalent iron, or divalent nickel, particularly preferably a copper complex.

### <Reversible addition-fragmentation chain transfer agent>

Controlled polymerization by reversible addition-fragmentation chain transfer (RAFT) occurs via a rapid chain transfer reaction between a growing polymer radical and an inert polymer chain. After the initiation of the polymerization, the polymerization control agent serves as part of the inert polymer chain.

Examples of the polymerization control agent to be used in the controlled polymerization by the RAFT include a dithioester, a trithiocarbonate, a xanthate, a dithioacylhydrazone, and a dibenzyltrithiocarbonate.

In the RAFT polymerization, a polymerization initiator produces a free radical to subsequently react with the polymerizable monomer. A monomer radical reacts with any other monomer and grows to form a chain. The chain can react with the polymerization control agent such as the dithioester described above. The polymerization control agent falls asunder to form an R·, and the R· can react with another monomer to be newly formed or continue growing. Theoretically, the growth continues until the monomer disappears, and then a termination stage starts.

### <Iniferter>

A compound residue (iniferter) serving as a starting point of the living radical graft polymerization is introduced into a side chain of a polymer to which the radically polymerizable monomer is to be grafted, and the radically polymerizable monomer is subjected to living radical polymerization. Thus, a graft chain formed of a living polymer is formed.

For example, a dithiocarbamate-based compound or a styrene/nitroxide-based compound is used as a compound that forms the above-mentioned iniferter.

### <Organotellurium compound>

The organotellurium compound is a compound that has been recently found as a polymerization control agent in living radical polymerization, and is most suitably used among the various polymerization control agents in the present invention not only because of its good stability in an aqueous system but also from the viewpoints of, for example, molecular weight controllability, functional group adaptability, and the ease with which a terminal of a living polymer is modified. Hereinafter, the organotellurium compound is described in detail.

In the present invention, preferred examples of the organotellurium compound to be used as the polymerization control agent includes an organotellurium compound (I) represented by the general formula (1):

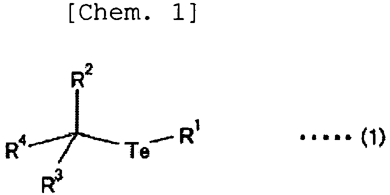

where R¹ represents an alkyl group having 1 to 8 carbon atoms, an aryl group, a substituted aryl group, or an aromatic heterocyclic group, R² and R³ each independently represent a hydrogen atom or an alkyl group having 1 to 8 carbon atoms, and R⁴ represents an aryl group, a substituted aryl group, an aromatic heterocyclic group, an acyl group, an oxycarbonyl group, or a cyano group, and/or an organotellurium compound (II) represented by the general formula (2) :

(R⁵Te)₂ ····· (2)

where R⁵ represents an alkyl group having 1 to 8 carbon atoms, an aryl group, a substituted aryl group, or an aromatic heterocyclic group, and two R⁵'s may be identical to or different from each other.

In the above-mentioned general formula (1), specific examples of the group represented by R¹ are as described below.

Examples of the alkyl group having 1 to 8 carbon atoms may include linear, branched, or cyclic alkyl groups each having 1 to 8 carbon atoms, such as methyl group, ethyl group, n-propyl group, isopropyl group, cyclopropyl group, n-butyl group, sec-butyl group, tert-butyl group, cyclobutyl group, n-pentyl group, n-hexyl group, n-heptyl group, and n-octyl group. The alkyl group is preferably a linear or branched alkyl group having 1 to 4 carbon atoms, more preferably methyl group or ethyl group.

Examples of the aryl group may include phenyl group and naphthyl group. Examples of the substituted aryl group may include a phenyl group having a substituent and a naphthyl group having a substituent. Examples of the aromatic heterocyclic group may include pyridyl group, furyl group, and thienyl group. Examples of the substituent of the above-mentioned aryl group having a substituent may include a halogen atom, a hydroxyl group, an alkoxy group, an amino group, a nitro group, a cyano group, a carbonyl-containing group represented as -COR⁶ (R⁶ represents an alkyl group having 1 to 8 carbon atoms, an aryl group, an alkoxy group having 1 to 8 carbon atoms, or an aryloxy group), a sulfonyl group, and a trifluoromethyl group. The aryl group is preferably a phenyl group or a trifluoromethyl-substituted phenyl group. Further, one or two of those substituents preferably substitute the aryl group preferably at the para position or the ortho position.

Examples of the alkyl group having 1 to 8 carbon atoms represented by each of R² and R³ in the above-mentioned general formula (1) may include the same examples as those of the alkyl group described above for R¹.

The group represented by R⁴ in the above-mentioned general formula (1) is specifically as described below.

Examples of the aryl group, substituted aryl group, and aromatic heterocyclic group may include the same examples as those of the groups described above for R¹.

Examples of the acyl group may include a formyl group, an acetyl group, and a benzoyl group.

The oxycarbonyl group is preferably a group represented by -COOR⁷ (where R⁷ represents a hydrogen atom, an alkyl group having 1 to 8 carbon atoms, or an aryl group), and examples of the group may include a carboxyl group, a methoxycarbonyl group, an ethoxycarbonyl group, a propoxycarbonyl group, an n-butoxycarbonyl group, an sec-butoxycarbonyl group, a tert-butoxycarbonyl group, an n-pentoxycarbonyl group, and a phenoxycarbonyl group. Of those, a methoxycarbonyl group and an ethoxycarbonyl group are preferred oxycarbonyl groups.

Preferred groups each represented by R⁴ are, for example, an aryl group, a substituted aryl group, and an oxycarbonyl group. A preferred aryl group is a phenyl group, and a preferred substituted aryl group is a halogen atom-substituted phenyl group or a trifluoromethyl-substituted phenyl group. In addition, the number of those substituents is desirably one to five in the case of halogen atoms, and is desirably one or two in the case of alkoxy groups or trifluoromethyl groups. When the number of substituents is one, the substituent is preferably placed at a para position or ortho position, and when the number of substituents are two, the substituents are preferably placed at meta positions. A preferred oxycarbonyl group is a methoxycarbonyl group or an ethoxycarbonyl group.

The organotellurium compound represented by the general formula (1) is preferably a compound in which R¹ represents an alkyl group having 1 to 4 carbon atoms, R² and R³ each represent a hydrogen atom or an alkyl group having 1 to 4 carbon atoms, and R⁴ represents an aryl group, a substituted aryl group, or an oxycarbonyl group. The compound is particularly preferably such that R¹ represents an alkyl group having 1 to 4 carbon atoms, R² and R³ each represent a hydrogen atom or an alkyl group having 1 to 4 carbon atoms, and R⁴ represents a phenyl group, a substituted phenyl group, a methoxycarbonyl group, or an ethoxycarbonyl group.

Examples of the organotellurium compound (I) represented the general formula (1) may include (methyltellanyl-methyl)benzene, (1-methyltellanyl-ethyl)benzene, (2-methyltellanyl-propyl)benzene, 1-chloro-4-(methyltellanyl-methyl)benzene, 1-hydroxy-4-(methyltellanyl-methyl)benzene, 1-methoxy-4-(methyltellanyl-methyl)benzene, 1-amino-4-(methyltellanyl-methyl)benzene, 1-nitro-4-(methyltellanyl-methyl)benzene, 1-cyano-4-(methyltellanyl-methyl)benzene, 1-methylcarbonyl-4-(methyltellanyl-methyl)benzene, 1-phenylcarbonyl-4-(methyltellanyl-methyl)benzene, 1-methoxycarbonyl-4-(methyltellanyl-methyl)benzene, 1-phenoxycarbonyl-4-(methyltellanyl-methyl)benzene, 1-sulfonyl-4-(methyltellanyl-methyl)benzene, 1-trifluoromethyl-4-(1-methyltellanyl-methyl)benzene, 1-chloro-4-(1-methyltellanyl-ethyl)benzene, 1-hydroxy-4-(1-methyltellanyl-ethyl)benzene, 1-methoxy-4-(1-methyltellanyl-ethyl)benzene, 1-amino-4-(1-methyltellanyl-ethyl)benzene, 1-nitro-4-(1-methyltellanyl-ethyl)benzene, 1-cyano-4-(1-methyltellanyl-ethyl)benzene, 1-methylcarbonyl-4-(1-methyltellanyl-ethyl)benzene, 1-phenylcarbonyl-4-(1-methyltellanyl-ethyl)benzene, 1-methoxycarbonyl-4-(1-methyltellanyl-ethyl)benzene, 1-phenoxycarbonyl-4-(1-methyltellanyl-ethyl)benzene, 1-sulfonyl-4-(1-methyltellanyl-ethyl)benzene, 1-trifluoromethyl-4-(1-methyltellanyl-ethyl)benzene[1-(1-methy ltellanyl-ethyl)-4-trifluoromethyl benzene], 1-(1-methyltellanyl-ethyl)-3,5-bis-trifluoromethyl benzene, 1,2,3,4,5-pentafluoro-6-(1-methyltellanyl-ethyl)benzene, 1-chloro-4-(2-methyltellanyl-propyl)benzene, 1-hydroxy-4-(2-methyltellanyl-propyl)benzene, 1-methoxy-4-(2-methyltellanyl-propyl)benzene, 1-amino-4-(2-methyltellanyl-propyl)benzene, 1-nitro-4-(2-methyltellanyl-propyl)benzene, 1-cyano-4-(2-methyltellanyl-propyl)benzene, 1-methylcarbonyl-4-(2-methyltellanyl-propyl)benzene, 1-phenylcarbonyl-4-(2-methyltellanyl-propyl)benzene, 1-methoxycarbonyl-4-(2-methyltellanyl-propyl)benzene, 1-phenoxycarbonyl-4-(2-methyltellanyl-propyl)benzene, 1-sulfonyl-4-(2-methyltellanyl-propyl)benzene, 1-trifluoromethyl-4-(2-methyltellanyl-propyl)benzene, 2-(methyltellanyl-methyl)pyridine, 2-(1-methyltellanyl-ethyl)pyridine, 2-(2-methyltellanyl-propyl)pyridine, 2-methyl-2-methyltellanyl-propanal, 3-methyl-3-methyltellanyl-2-butanone, methyl 2-methyltellanyl-ethanoate, methyl 2-methyltellanyl-propionate, methyl 2-methyltellanyl-2-methylpropionate, ethyl 2-methyltellanyl-ethanoate, ethyl 2-methyltellanyl-propionate, ethyl 2-methyltellanyl-2-methylpropionate [ethyl-2-methyl-2-methyltellanyl-propionate], ethyl 2-(n-butyltellanyl)-2-methylpropionate [ethyl-2-methyl-2-n-butyltellanyl-propionate], 2-methyltellanylacetonitrile, 2-methyltellanylpropionitrile, 2-methyl-2-methyltellanylpropionitrile, (phenyltellanyl-methyl)benzene, (1-phenyltellanyl-ethyl)benzene, and (2-phenyltellanyl-propyl)benzene. Further, also included are all compounds obtained by changing the methyltellanyl, 1-methyltellanyl, or 2-methyltellanyl in the above-mentioned compounds to ethyltellanyl, 1-ethyltellanyl, 2-ethyltellanyl, butyltellanyl, 1-butyltellanyl, or 2-butyltellanyl, respectively.

Of those, (methyltellanyl-methyl)benzene, (1-methyltellanyl-ethyl)benzene, (2-methyltellanyl-propyl)benzene, 1-chloro-4-(1-methyltellanyl-ethyl)benzene, 1-trifluoromethyl-4-(1-methyltellanyl-ethyl)benzene[1-(1-methy ltellanyl-ethyl)-4-trifluoromethyl benzene], methyl 2-methyltellanyl-2-methylpropionate, ethyl 2-methyltellanyl-2-methylpropionate [ethyl-2-methyl-2-methyltellanyl-propionate], ethyl 2-(n-butyltellanyl)-2-methylpropionate [ethyl-2-methyl-2-n-butyltellanyl-propionate], 1-(1-methyltellanyl-ethyl)-3,5-bis-trifluoromethyl benzene, 1,2,3,4,5-pentafluoro-5-(1-methyltellanyl-ethyl)benzene, 2-methyltellanylpropionitrile, 2-methyl-2-methyltellanylpropionitrile, (ethyltellanyl-methyl)benzene, (1-ethyltellanyl-ethyl)benzene, (2-ethyltellanyl-propyl)benzene, methyl 2-ethyltellanyl-2-methylpropionate, ethyl 2-ethyltellanyl-2-methylpropionate, 2-ethyltellanylpropionitrile, 2-methyl-2-ethyltellanylpropionitrile, (n-butyltellanyl-methyl)benzene, (1-n-butyltellanyl-ethyl)benzene, (2-n-butyltellanyl-methyl)benzene, methyl 2-n-butyltellanyl-2-methylpropionate, ethyl 2-n-butyltellanyl-2-methylpropionate, 2-n-butyltellanylpropionitrile, and 2-methyl-2-n-butyltellanylpropionitrile may be preferably given.

One kind of those organotellurium compounds (I) may be used alone, or two or more kinds thereof may be used in combination.

On the other hand, in the above-mentioned general formula (2), R⁵, which has the same meaning as that of R¹ in the above-mentioned general formula (1), preferably represents an alkyl group having 1 to 4 carbon atoms or a phenyl group. Two R⁵'s, which may be identical to or different from each other, are preferably identical to each other from the viewpoint of ease of production.

Examples of the organotellurium compound (II) represented by the general formula (2) include dimethyl ditelluride, diethyl ditelluride, di-n-propyl ditelluride, diisopropyl ditelluride, dicyclopropyl ditelluride, di-n-butyl ditelluride, di-sec-butyl ditelluride, di-tert-butyl ditelluride, dicyclobutyl ditelluride, diphenyl ditelluride, bis-(p-methoxyphenyl) ditelluride, bis-(p-aminophenyl) ditelluride, bis-(p-nitrophenyl) ditelluride, bis-(p-cyanophenyl) ditelluride, bis-(p-sulfonylphenyl) ditelluride, dinaphthyl ditelluride, and dipyridyl ditelluride. Of those, dimethyl ditelluride, diethyl ditelluride, di-n-propyl ditelluride, di-n-butyl ditelluride, and diphenyl ditelluride are preferred, and dimethyl ditelluride, diethyl ditelluride, di-n-propyl ditelluride, and di-n-butyl ditelluride are particularly preferred.

One kind of those organotellurium compounds (II) may be used alone, or two or more kinds thereof may be used in combination.

In the present invention, the above-mentioned organotellurium compound (I) may be used alone as the polymerization control agent, the organotellurium compound (II) may be used alone as the agent, or the organotellurium compounds (I) and (II) may be used in combination as the agent.

### <Organoiodine compound>

The organoiodine compound is used as a control agent in controlled polymerization by degenerative transfer (DT). The controlled polymerization by the DT occurs via direct exchange of atoms or groups between proliferating macroradical chains. In this case, the polymerization control agent provides atoms or groups needed for the DT, and the organoiodine compound is suitably used. Examples of the organoiodine compound may include an alkyl iodide, a perfluoroalkyl iodide, and an active organic iodide.

### (Polymerization initiator)

In the method of producing a graft copolymer of the present invention, another polymerization initiator may be used in combination with any one of the above-mentioned various polymerization control agents.

The polymerization initiator is not particularly limited, and various radical polymerization initiators may be used. Generally used polymerization initiators include, for example, benzoyl peroxide, hydrogen peroxide, cumene hydroperoxide, tert-butyl hydroperoxide, di-tert-butyl peroxide, 2,2-azobis(2-diaminopropane) hydrochloride, 2,2-azobis(2-diaminopropane) dihydrochloride, 2,2-azobis(2,4-dimethylvaleronitrile), potassium persulfate, sodium persulfate, ammonium persulfate, other azo-based initiators, and other redox-based initiators.

Of the above-mentioned initiators, azo-based initiators and redox-based initiators are suitable from the viewpoint of carrying out living radical graft polymerization in an aqueous medium.

### <Azo-based initiator>

Examples of the azo-based initiators include 2,2'-azobis(isobutyronitrile) (AIBN), 2,2'-azobis(2-methylbutyronitrile) (AMBN), 2,2'-azobis(2,4-dimethylvaleronitrile) (ADVN), 1,1'-azobis(1-cyclohexanecarbonitrile) (ACHN), dimethyl-2,2'-azobisisobutyrate (MAIB), 4,4'-azobis(4-cyanovaleric acid) (ACVA), 1,1'-azobis(1-acetoxy-1-phenylethane), 2,2'-azobis(2-methylbutylamide), 2,2'-azobis(4-methoxy-2,4-dimethylvaleronitrile), 2,2'-azobis(2-methylamidinopropane) dihydrochloride, 2,2'-azobis[2-(2-imidazolin-2-yl)propane], 2,2'-azobis[2-methyl-N-(2-hydroxyethyl)propionamide], 2,2'-azobis(2,4,4-trimethylpentane), 2-cyano-2-propylazoformamide, 2,2'-azobis(N-butyl-2-methylpropionamide), and 2,2'-azobis(N-cyclohexyl-2-methylpropionamide).

One kind of those azo-based initiators may be used alone, or two or more kinds thereof may be used in combination, and the azo-based initiators are preferably appropriately selected depending on the reaction conditions.

For example, it is preferred to use 2,2'-azobis(2,4-dimethylvaleronitrile) (ADVN) or 2,2'-azobis(4-methoxy-2,4-dimethylvaleronitrile) in the case of low-temperature polymerization (about 0 to 50°C), 2,2'-azobis(isobutyronitrile) (AIBN), 2,2'-azobis(2-methylbutyronitrile) (AMBN), dimethyl-2,2'-azobisisobutyrate (MAIB), 1,1'-azobis(1-acetoxy-1-phenylethane), 4,4'-azobis(4-cyanovaleric acid) (ACVA), 2,2'-azobis(2-methylbutylamide), 2,2'-azobis(2-methylamidinopropane) dihydrochloride, or 2,2'-azobis[2-(2-imidazolin-2-yl)propane] in the case of moderate-temperature polymerization (about 50 to 70°C), or 1,1'-azobis(1-cyclohexanecarbonitrile) (ACHN), 2-cyano-2-propylazoformamide, 2,2'-azobis(N-butyl-2-methylpropionamide), 2,2'-azobis(N-cyclohexyl-2-methylpropionamide), 2,2'-azobis(2,4,4-trimethylpentane), or 2,2'-azobis[2-methyl-N-(2-hydroxyethyl)propionamide] in the case of high-temperature polymerization (about 70 to 100°C).

### <Redox-based initiator>

A combination of a peroxide and a reducing agent is used as the redox-based initiator. Examples of the peroxide include: hydrogen peroxide; water-soluble organic peroxides such as cumene hydroperoxide and tert-butyl hydroperoxide; various water-soluble azo-based initiators; and potassium persulfate, sodium persulfate, and ammonium persulfate. One kind of those peroxides may be used alone, or two or more kinds thereof may be used in combination.

Meanwhile, examples of the reducing agent include: polyamines such as tetraethylenepentamine; mercaptanes; ascorbic acid; and salts that form reductive metal ions such as an Fe²⁺ salt. One kind of those reducing agents may be used alone, or two or more kinds thereof may be used in combination.

A usage ratio between the peroxide and the reducing agent in the redox-based initiator, which varies depending on the kinds of the peroxide and reducing agent to be used, is typically about 10:1 to 1:10, preferably 1:5 to 3:1 in terms of a molar ratio.

A preferred combination of the peroxide and the reducing agent in the redox-based initiator is, for example, a combination of tert-butyl hydroperoxide and tetraethylenepentamine.

When the redox-based initiator is used, a polymerization temperature is typically about 0 to 80°C, preferably 0 to 60°C.

### (Radically polymerizable monomer)

In the method of producing a graft copolymer of the present invention, the radically polymerizable monomer to be subjected to the living radical graft polymerization with the rubber component formed of the natural rubber is, for example, a compound having, in a molecule thereof, at least one functional group containing at least one kind selected from a nitrogen atom, an oxygen atom, a sulfur atom, a halogen atom, and a metal atom, or an aromatic vinyl compound.

Examples of the above-mentioned functional group may include an isocyanate group, a thioisocyanate group, an amino group, an imino group, a sulfone group, a hydroxy group, a carboxy group, a thiocarboxy group, a carbonyl group, a thiocarbonyl group, a formyl group, a thioformyl group, a silanol group, a hydrocarbyloxy group, a nitrile group, a pyridyl group, an amide group, an imide group, an imidazolyl group, an ammonium group, a hydrazo group, an azo group, a diazo group, a ketimine group, an epoxy group, a thioepoxy group, an oxycarbonyl group or an ester bond, a carbonylthio group or a thioester bond, an oxy group or an ether bond, a glycidoxy group, a sulfide group or a thioether bond, a disulfide group, a mercapto group, a hydrocarbylthio group, a sulfonyl group, a sulfinyl group, an imine residue, another nitrogen-containing heterocyclic group, an oxygen-containing heterocyclic group, a sulfur-containing heterocyclic group, a hydrocarbyloxysilyl group, an organotin group, a chlorine atom, or a bromine atom. One kind of those functional groups may be incorporated into the radically polymerizable monomer, or two or more kinds thereof may be incorporated into the monomer.

In the present invention, when the graft copolymer to be obtained is used in a rubber composition, out of the above-mentioned functional groups, a functional group containing a nitrogen atom such as an isocyanate group, an amino group, an imino group, an amide group, an imide group, a pyridyl group, an imine residue, or any other nitrogen-containing heterocyclic group is preferred, and an isocyanate group or a pyridyl group is particularly suitable from the viewpoint of an interaction with carbon black or an inorganic filler in the composition.

The radically polymerizable monomer having any such functional group as described above has only to be a compound having the above-mentioned functional group and a radically polymerizable group in a molecule thereof, and preferred examples of the monomer include, but not particularly limited to, radically polymerizable monomers having isocyanate groups or pyridyl groups as functional groups. Examples of such monomer may include isocyanatomethyl (meth)acrylate, isocyanatoethyl (meth)acrylate, isocyanatopropyl (meth)acrylate, isocyanatobutyl (meth)acrylate, methacryloyl isocyanate, isocyanatomethyl(meth)acrylamide, isocyanatoethyl(meth)acrylamide, isocyanatopropyl(meth)acrylamide, isocyanatobutyl(meth)acrylamide, 1-isocyanato-2-vinylbenzene, 1-cyanato-3-vinylbenzene, 1-isocyanato-4-vinylbenzene, 2-vinylpyridine(2-VP), and 4-vinylpyridine(4-VP).

Further, examples of the radically polymerizable monomer having a functional group containing an oxygen atom include (meth)acrylic acid, (meth)acrylamide, (N-)monoalkyl(meth)acrylamides (such as N-isopropyl(meth)acrylamide), 2-hydroxyethyl (meth)acrylate, methyl (meth)acrylate, ethyl (meth)acrylate, t-butyl (meth)acrylate, adamantyl (meth)acrylate, isobornyl (meth)acrylate, and methyl vinyl ketone (MVK). Examples of the radically polymerizable monomer having a functional group containing a nitrogen atom include acrylonitrile. Examples of the radically polymerizable monomer having a functional group containing an oxygen atom and a nitrogen atom include N,N-dimethylaminoethyl methacrylate and N,N-diethylaminoethyl methacrylate. Further, the radically polymerizable monomer having a functional group containing a metal atom is, for example, allyl-tri-n-butyltin, and the radically polymerizable monomer having a hydrocarbyloxysilyl group is, for example, γ-methacryloxypropyltrimethoxysilane or vinyl methyl diethoxysilane.

One kind of the radically polymerizable monomers having the above-mentioned functional groups may be used alone, or two or more kinds thereof may be used in combination.

Further, an aromatic vinyl compound is also preferred as the radically polymerizable monomer. Examples of the aromatic vinyl compound include styrene (St), α-methylstyrene (α-MeSt), 1-vinylnaphthalene, 3-vinyltoluene, ethylvinyl benzene, divinyl benzene, 4-cyclohexylstyrene, 2,4,6-trimethylstyrene, p-tert-butyl-α-methylstyrene, and p-tert-butylstyrene.

### (Production of graft copolymer)

In the method of producing a graft copolymer of the present invention, the graft copolymer is produced by subjecting the radically polymerizable monomer to the living radical graft polymerization with the rubber component formed of the natural rubber in the aqueous medium in the presence of the polymerization control agent. The following conditions are preferably adopted in order that the graft copolymer may be efficiently produced.

### <Preferred conditions for living radical graft polymerization>

(1) The living radical graft polymerization is desirably performed by emulsion polymerization, and therefore, the rubber component as a raw material is used in a latex form, and the emulsion polymerization is performed in the presence of a surfactant and/or a dispersant.
(2) The living radical graft polymerization is performed not only by using the organotellurium compound (I) and/or organotellurium compound (II) described in the foregoing as a polymerization control agent but also by using the azo-based initiator or redox-based initiator as a polymerization initiator.
(3) A monomer having any such functional group as described in the foregoing in a molecule thereof is used as the radically polymerizable monomer to be grafted. When a commercially available product containing a polymerization inhibitor is used, the polymerization inhibitor is preferably removed by a proper approach in advance.
(4) The graft amount of the radically polymerizable monomer is controlled so as to be preferably 0.1 to 20 mass%, more preferably 0.2 to 10 mass%, still more preferably 0.5 to 10 mass% based on the rubber component in the graft copolymer to be obtained.

Next, the production of a graft copolymer by living radical graft polymerization in which the above-mentioned conditions are adopted is specifically described.

First, a functional group-containing radically polymerizable monomer to be subjected to the living radical graft polymerization, an emulsifier such as an anionic surfactant or a nonionic surfactant, a dispersant such as a water-soluble polymer compound like any one of the polyvinyl alcohols to be used as required, and the aqueous medium are mixed into the rubber component, and then the mixture is subjected to an emulsification treatment with an emulsifying apparatus or the like so that a monomer emulsion may be prepared.

Next, a natural rubber latex (optionally with a synthetic diene-based rubber latex), the above-mentioned monomer emulsion, and the aqueous medium are mixed, and then the organotellurium compound (I) and/or the organotellurium compound (II) as the polymerization control agent, and the azo-based initiator or redox-based initiator as the polymerization initiator are added to the mixture so that a liquid for a reaction may be prepared.

Next, the living radical graft polymerization is performed by heating the liquid for a reaction at a predetermined temperature. When the azo-based initiator is used as the polymerization initiator, a polymerization temperature is typically about 0 to 100°C, preferably 40 to 90°C. When the redox-based initiator is used, the polymerization temperature is typically about 0 to 80°C, preferably 0 to 70°C.

A reaction time has only to be appropriately selected depending on the reaction temperature, and the kinds of the rubber component, radically polymerizable monomer, emulsifier, polymerization control agent, polymerization initiator, and the like to be used so that the polymerization reaction may be completed. The reaction time is preferably 24 hours or less.

It should be noted that the above-mentioned polymerization control agent or polymerization initiator may be added in the step of preparing the monomer emulsion.

For example, neutral water containing an inorganic salt, alkaline water containing an alkali, acid water containing an acid, or water containing a polar solvent such as an alcohol -to say nothing of water- can be used as the above-mentioned aqueous medium.

Specifically, there can be used as the above-mentioned emulsifier, for example, an anionic surfactant such as a dodecylbenzenesulfonate, a lauryl sulfate salt, a dioctylsulfosuccinate, a dioctylsuccinate, a lauryl methyl taurate salt, a polyoxyethylene alkyl ether sulfate, or a lauryl phosphate salt, or a nonionic surfactant such as a polyoxyethylene alkyl ether.

Specifically, there can be used as the above-mentioned dispersant, for example, a water-soluble high molecular compound such as a nonionic high molecular compound such as polyvinyl alcohol, polyethylene oxide, or a cellulose derivative, or an anionic high molecular compound such as polyacrylic acid and a salt thereof, polymethacrylic acid and a salt thereof, a copolymer of a methacrylic acid ester and methacrylic acid and/or a salt thereof.

The concentration of the rubber component formed of the natural rubber in the above-mentioned liquid for a reaction is typically about 5 to 80 mass%, preferably 10 to 65 mass% from the viewpoint of, for example, polymerizability. The amount of the emulsifier (solid content) in the liquid for a reaction is typically about 0.3 to 50 mass%, preferably 0.5 to 30 mass% based on the total amount of the rubber component and the radically polymerizable monomer.

In addition, the amount of the polymerization control agent is typically about 0.01 to 30 parts by mass, preferably 0.1 to 20 parts by mass based on 100 parts by mass of the loaded radically polymerizable monomer from the viewpoint of living radical polymerizability. When the azo-based initiator is used as the polymerization initiator, its amount is typically 0.001 to 10 parts by mass, preferably 0.01 to 5 parts by mass based on 100 parts by mass of the loaded radically polymerizable monomer. When the redox-based initiator is used, the total amount of the peroxide and the reducing agent is typically about 0.001 to 5 parts by mass, preferably 0.01 to 1 part by mass based on 100 parts by mass of the loaded radically polymerizable monomer.

The used amount of the functional group-containing radically polymerizable monomer is desirably controlled so that the graft amount of the radically polymerizable monomer may be preferably 0.01 to 50 mass%, more preferably 0.01 to 20 mass% based on the rubber component in the graft copolymer to be obtained (main chain component excluding the graft component of the graft copolymer). As long as the graft amount is 0.01 mass% or more, when the graft copolymer is incorporated into a rubber composition, improving effects on the low heat generating property, wear resistance, and fracture characteristic of the rubber composition are exerted. As long as the graft amount is 20mass% or less, characteristics intrinsic to the rubber component are not impaired to a very large extent, and the deterioration of the processability of the rubber composition can be suppressed.

It should be noted that the above-mentioned graft amount is a value calculated as described below.

### <Calculation of graft amount>

The resultant graft copolymer was extracted with petroleum ether, and was then further extracted with a mixed solvent containing acetone and methanol at a ratio of 2:1. The resultant extract was analyzed so that the amount of the radically polymerizable monomer and/or a homopolymer thereof were/was calculated.
Graft amount (mass%)={[(mass of radically polymerizable monomer used in reaction)-(mass of radically polymerizable monomer in extract) - (mass of homopolymer in extract)] / (mass of rubber component in graft copolymer)}×100

Thus, the graft copolymer in which a living radical polymer is grafted to the natural rubber can be obtained in a latex form. The graft copolymer obtained by the method of the present invention has such a feature that a gel content (toluene insoluble content) is small.

In the present invention, the grafted living radical polymer has a number-average molecular weight of typically about 5,000 to 3,000,000, preferably 10,000 to 2,000,000. In addition, the radically polymerizable monomer unit of which the living radical polymer is constituted can be a unit into which a functional group is introduced.

The introduction of a predetermined functional group through the modification of an active terminal of a polymer obtained by living anionic polymerization has been conventionally performed. In contrast, in the method of the present invention, the resultant graft copolymer can be such that the monomer unit of which the living radical polymer of a graft chain is constituted has a functional group. Accordingly, the number of functional groups in the polymer can be made much larger than that of a product as a result of the modification of an active terminal of the polymer obtained by the conventional living anionic polymerization. Therefore, the graft copolymer interacts with carbon black or an inorganic filler in a rubber composition to an extremely high degree, and the incorporation of the copolymer into the rubber composition improves the dispersibility of the carbon black or inorganic filler in the rubber composition. As a result, a rubber composition excellent in, for example, low heat generating property, wear resistance, and fracture characteristic can be provided.

The present invention also provides a graft copolymer latex characterized by being obtained by the method of the present invention described in the foregoing. The graft copolymer latex is particularly suitable for use in a tire.

### [Graft copolymer]

A graft copolymer of the present invention is obtained by coagulating and drying the above-mentioned graft copolymer latex.

A specific method for obtaining the graft copolymer of the present invention is as described below. The graft copolymer latex produced by the method described in the foregoing is coagulated with a coagulant, e.g., an acid such as formic acid or sulfuric acid, or a salt such as sodium chloride, and is then washed. After that, the washed product is dried with a dryer such as a vacuum dryer, an air dryer, or a drum dryer. Thus, a graft copolymer in a solid state can be obtained.

When the graft copolymer of the present invention is used as a rubber component for a rubber composition, the graft copolymer is preferably as described below from such a viewpoint that a high interaction with carbon black or an inorganic filler as a reinforcing material or the like in the rubber composition can be obtained. Amonomer having, in a molecule thereof, a functional group containing a nitrogen atom such as an isocyanate group or a pyridyl group is subjected to living radical graft polymerization with a natural rubber. Any one of those listed as the preferred radically polymerizable monomers in the method of producing a graft copolymer described in the foregoing can be used as the above-mentioned radically polymerizable monomer. The graft copolymer of the present invention is particularly suitable for use in a tire.

The graft copolymer of the present invention has a much smaller toluene insoluble content (gel content) than that of a graft copolymer obtained by ordinary radical graft polymerization because the graft copolymer of the present invention is obtained by the living radical graft polymerization. For example, when the graft amount is about 3 to 5 mass%, the toluene insoluble content of the graft copolymer of the present invention using an SBR as a raw material is typically about several mass percent. In contrast, when the graft amount is about 3 to 5 mass%, the toluene insoluble content of the graft copolymer obtained with an SBR as a raw material by the ordinary radical graft polymerization is typically about a dozen or so mass percent. It should be noted that a method of measuring a toluene insoluble content is described later.

### [Rubber composition]

The rubber composition of the present invention is characterized by containing the above-mentioned graft copolymer of the present invention, and is specifically, for example, a rubber composition containing: (A) a rubber component containing the graft copolymer; and (B) carbon black and/or an inorganic filler at a ratio of 5 to 100 parts by mass based on 100 parts by mass of the rubber component.

### ((A) Rubber component)

(A) The rubber component in the rubber composition of the present invention contains the graft copolymer at a content of preferably 10 mass% or more, more preferably 50 mass% or more. As long as the content of the graft copolymer in the rubber component is 10 mass% or more, improving effects on the low heat generating property, wear resistance, fracture characteristic, and the like of the rubber composition are exerted. It should be noted that one kind of the graft copolymers may be used, or two or more kinds thereof may be used in combination.

In (A) the rubber component, examples of another rubber component to be used in combination with the graft copolymer include a natural rubber, a synthetic isoprene rubber, a butadiene rubber, a styrene-butadiene rubber, an ethylene-α-olefin copolymer rubber, an ethylene-α-olefin-diene copolymer rubber, an acrylonitrile-butadiene copolymer rubber, a chloroprene rubber, a halogenated butyl rubber, and mixtures thereof. In addition, a rubber component in which part of any rubber component has a branched structure as a result of the use of a polyfunctional modifying agent, e.g., a modifying agent such as tin tetrachloride or silicon tetrachloride is permitted.

### ((B) Carbon black and/or inorganic filler)

The rubber composition of the present invention may contain the carbon black, may contain the inorganic filler, or may contain both thereof as a reinforcing filler serving as the component (B).

### <Carbon Black>

No particular limitation is imposed on the carbon black, and for example, SRF, GPF, FEF, HAF, ISAF, SAF, or the like may be employed. The preferred carbon black has an iodine adsorption (IA) of 60 mg/g or more and a dibutyl phthalate oil absorption (DBP) of 80 ml/100 g or more. From the viewpoint of excellence in wear resistance, HAF, N339, IISAF, ISAF, and SAF are particularly preferred. IA is measured in conformity with JIS K 6217-1:2001 and DBP is measured in conformity with JIS K 6217-4:2001.

### <Inorganic filler>

The inorganic fillers can be classified into silica and an inorganic filler except the silica.

No particular limitation is imposed on the silica, and any of the silica species conventionally employed as rubber reinforcing fillers may be selected and used.

Examples of the silica include wet silica (hydrous silicic acid), dry silica (anhydrous silicic acid), calcium silicate, and aluminum silicate. Of those, wet silica is preferred, because the silica remarkably improves both fracture characteristic and wet grip performance. The wet silica has a nitrogen adsorption specific surface area (N₂SA) based on a BET method (ISO 5794/1) of preferably 140 to 280 m²/g, more preferably 150 to 250 m²/g in terms of, for example, a balance among reinforcing property, processability, wet grip performance, and wear resistance. Suitable examples of the wet silica include an AQ, VN3, LP, and NA manufactured by Tosoh Silica, and an Ultrasil VN3 (N₂SA: 175 m²/g) manufactured by Degussa.

On the other hand, the inorganic filler except the silica is, for example, a compound represented by the following general formula (3).

mM¹·xSiOy· zH₂O ····· (3)

(In the formula, M¹ represents at least one kind selected from metals selected from the group consisting of aluminum, magnesium, titanium, calcium, and zirconium, oxides or hydroxides of these metals and hydrates of the oxides or hydroxides, and carbonates of these metals, and m, x, y, and z represent an integer of 1 to 5, an integer of 0 to 10, an integer of 2 to 5, and an integer of 0 to 10, respectively. It should be noted that when both of x and z in the above-mentioned formula each represent 0, the inorganic compound is at least one metal selected from aluminum, magnesium, titanium, calcium, and zirconium, or an oxide or a hydroxide of the metal).

There can be used, as the inorganic filler represented by the above-mentioned formula, alumina (Al₂O₃) such as γ-alumina or α-alumina, alumina monohydrate (Al₂O₃·H₂O) such as boehmite or diaspore, aluminum hydroxide [Al(OH)₃] such as gibbsite or bayerite, aluminum carbonate [Al₂(CO₃)₂], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃· 2SiO₂), kaolin (Al₂O₃· 2siO₂· 2H₂O), pyrophyllite (Al₂O₃·4SiO₂·H₂O), bentonite (Al₂O₃·4SiO₂·2H₂O), aluminum silicate (such as Al₂SiO₃·CaO·2SiO₂), magnesium calcium silicate (CaMgSiO₄), calcium carbonate (CaCO₃), zirconium oxide [Zr(CO₃)₂], crystalline aluminosilicate containing hydrogen, an alkali metal, or an alkaline earth metal that corrects a charge, such as anyone of various zeolites, or the like. In addition, the case where M¹ in the above-mentioned general formula (3) represents at least one selected from aluminum metal, an oxide or hydroxide of aluminum and a hydrate of the oxide or hydroxide, and a carbonate of aluminum is preferred.

One kind of those inorganic fillers represented by the above-mentioned formula may be used alone, or two or more kinds thereof may be used as a mixture.

The content of the carbon black and/or the inorganic filler as the component (B) in the rubber composition of the present invention preferably falls within the range of 5 to 100 parts by mass based on 100 parts by mass of (A) the rubber composition described above. As long as the content is 5 parts by mass or more, a reinforcing effect is exerted. As long as the content is 100 parts by mass or less, a reduction in processability can be suppressed. A more preferred content of the component (B) is 10 to 70 parts by mass.

When the inorganic filler is used as the component (B) in the rubber composition of the present invention, any such silane coupling agent as described below can be incorporated for the purpose of further improving the reinforcing effect.

### (Silane coupling agent)

The silane coupling agent includes, for example, bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N, N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. Of those, bis(3-triethoxysilylpropyl) polysulfide and 3-trimethoxysilylpropylbenzothiazolyl tetrasulfide are suited in terms of, for example, an effect of improving the reinforcing property.

In the rubber composition of the present invention, one kind of the above-mentioned silane coupling agents may be used alone, or two or more kinds thereof may be used in combination. The content of the silane coupling agent, which varies depending on the kinds and the like of the silane coupling agent and the inorganic filler, is generally selected from the range of 1 to 20 mass% based on the inorganic filler. When the amount is small, the effect of the coupling agent is unlikely to be sufficiently exerted, whereas when the amount is large, the rubber component may be gelated. From the viewpoints of the effect of the coupling agent, the prevention of gelation, and the like, the blending amount of the silane coupling agent preferably falls within the range of 5 to 15 mass%.

### (Other arbitrary components)

The rubber composition of the present invention is preferably sulfur-crosslinkable, and sulfur is suitably used as a vulcanizing agent. The used amount of the vulcanizing agent is preferably such that a sulfur portion (total amount of sulfur and the sulfur portion of a sulfur-donating agent) is blended in an amount of 0.1 to 10 parts by mass based on 100 parts by mass of the rubber component. This is because an elastic modulus and strength needed for a vulcanized rubber composition can be secured, and an improvement in fuel efficiency can be achieved as long as the used amount falls within the range. From the viewpoint, the sulfur portion is more preferably blended in an amount of 0.5 to 5 parts by mass.

As long as the object of the present invention is not impaired, the rubber composition of the present invention may further contain, in accordance with needs, various drugs usually used in the rubber industry, for example, a vulcanizing agent other than sulfur, a vulcanization-accelerating agent, a process oil, a plasticizer, an antioxidant, an anti-scorch agent, zinc oxide, stearic acid, a thermosetting resin, and a thermoplastic resin.

The vulcanization-accelerating agent which can be used in the present invention is not particularly limited, and may include, for example, thiazole-based vulcanization-accelerating agents such as 2-mercaptobenzothiazole (M), dibenzothiazyl disulfide (DM), and N-cyclohexyl-2-benzothiazylsulfenamide (CZ), and guanidine-based vulcanization-accelerating agents such as diphenylguanidine (DPG) . The used amount thereof is preferably 0.1 to 5.0 parts by mass, more preferably 0.2 to 3.0 parts by mass based on 100 parts by mass of the rubber component.

Further, the process oil to be used as a softening agent which can be used in the rubber composition of the present invention includes, for example, a paraffin-based oil, a naphthene-based oil, and an aromatic-based oil. The aromatic-based oil is used for uses in which the tensile strength and the wear resistance are regarded as important, and the naphthene-based oil or the paraffin-based oil is used for uses in which the hysteresis loss and the low-temperature characteristic are regarded as important. The used amount thereof is preferably 0 to 100 parts by mass based on 100 parts by mass of the rubber component, and when the amount is less than 100 parts by mass, deterioration in the tensile strength and the low heat generating property (low fuel consumption) of the vulcanized rubber can be suppressed.

Further, the antioxidant that can be used in the rubber composition of the present invention is, for example, 3C(N-isopropyl-N'-phenyl-p-phenylenediamine), 6C[N-(1,3-dimethylbutyl)-N'-phenyl-p-phenylenediamine], AW(6-ethoxy-2,2,4-trimethyl-1,2-dihydroquinoline), or a high-temperature condensation product of diphenylamine and acetone. The used amount of the antioxidant is preferably 0.1 to 6.0 parts by mass, more preferably 0.3 to 5.0 parts by mass based on 100 parts by mass of the rubber component.

The rubber composition of the present invention can be prepared by kneading the components (A) and (B) described above and a silane coupling agent or another rubber blending agent as an arbitrary component with a kneading machine such as a Banbury mixer, a roll, or an internal mixer.

The rubber composition of the present invention contains a graft copolymer obtained by subj ecting a functional group-containing radically polymerizable monomer to living radical graft polymerization with a natural rubber as a rubber component, the graft copolymer interacting with carbon black or an inorganic filler to a high degree. As a result, the dispersibility of the above-mentioned carbon black or inorganic filler is good, and the rubber composition is excellent in, for example, low heat generating property, wear resistance, and fracture characteristic. Therefore, the rubber composition of the present invention is particularly suitable for use in a tire.

### [Tire]

A tire of the present invention is characterized by using the rubber composition of the present invention described in the foregoing as any one of its tire members.

Specifically, the rubber composition of the present invention containing various drugs is processed into each member of a tire at its non-vulcanized stage, and is then applied and molded on a tire molding machine by an ordinary method. Thus, a green tire is formed. The green tire is heated and pressurized in a vulcanizer. Thus, the tire is obtained.

Although the above-mentioned tire member is not particularly limited, the rubber composition of the present invention is preferably used in a tread. A tire using the rubber composition in its tread is excellent in low heat generating property, wear resistance, and fracture characteristic. In addition, an inert gas such as nitrogen, argon, or helium as well as ordinary air or air with its oxygen partial pressure adjusted can be used as a gas with which the tire of the present invention is to be filled.

### Examples

Next, the present invention is described in more detail with reference to examples. However, the present invention is by no means limited by these examples.

It should be noted that the properties of a graft copolymer obtained in each example and the physical properties of a rubber composition were determined by the following methods.

### <Properties of graft copolymer>

### (1) Graft amount

Determination was performed in accordance with the method described in the body of the description.

### (2) Toluene insoluble content

0.2 Gram of a graft copolymer is added to 20 ml of toluene, and then the mixture is left to stand at room temperature for 24 hours. After that, a toluene insoluble gel portion is separated with a centrifugal separator "CP70G" manufactured by Hitachi Koki Co., Ltd. under the conditions of a rotor temperature of 10°C, a number of revolutions of 35,000 rpm, and 90 minutes. After that, the separated gel portion is vacuum-dried at 50°C, followed by weighing. A ratio of the mass of the gel portion to the mass of the graft copolymer used here is determined and represented as a toluene insoluble content in a percentage unit.

### <Physical properties of rubber composition>

### (3) Mooney viscosity

A Mooney viscosity ML₁₊₄ (130°C) was measured in conformity with JIS K 6300-1:2001 at 130°C.

### (4) Tensile stress at break (TSb) of vulcanized rubber

A vulcanized rubber obtained by vulcanizing a rubber composition at 145°C for 33 minutes was subjected to a tensile test in conformity with JIS K 6251:2004 so that its tensile stress at break (TSb) was measured. As a value for the TSb is larger, the fracture characteristic of the rubber is better.

### (5) Loss tangent (tanδ) of vulcanized rubber

The loss tangent (tanδ) of a vulcanized rubber obtained by vulcanizing a rubber composition at 145°C for 33 minutes was measured with a viscoelasticity-measuring apparatus [manufactured by Rheometrics] at a temperature of 50°C, a dynamic strain of 5%, and a frequency of 15 Hz, and was then represented as an index by defining the tanδ of each of Reference Example 3 and Reference Example 5 as 100. As a value for the tanδ is smaller, the rubber is more excellent in low heat generating property (low loss property).

### Production Example 1 Production of dimethyl ditelluride (DMeDT)

3.19 Grams (25 mmol) of metal tellurium [manufactured by Sigma-Aldrich, Inc., trade name "Tellurium" (-40 mesh)] were suspended in 25 ml of tetrahydrofuran (THF), and then 25 ml (28.5 mmol) of methyl lithium [manufactured by KANTO CHEMICAL CO. , INC. , a diethyl ether solution] were slowly added to the suspension at 0°C (10 minutes). The reaction solution was stirred until the metal tellurium completely disappeared (10 minutes). 20 Milliliters of a solution of ammonium chloride were added to the reaction solution at room temperature, and then the mixture was stirred for 1 hour. The organic layer was separated, and the aqueous layer was extracted with diethyl ether three times. The collected organic layer was dried with a salt cake, and was then concentrated under reduced pressure. Thus, 2.69 g of dark purple oily matter were obtained (9.4 mmol: 75 mass% yield).

### Production Example 2 Production of ethyl-2-methyl-2-n-butyltellanyl-propionate (BTEE)

6.38 Grams (50 mmol) of metal tellurium [manufactured by Sigma-Aldrich, Inc., trade name "Tellurium" (-40 mesh)] were suspended in 50 ml of THF, and then 34. 4 ml (55 mmol) of n-butyllithium (manufactured by Sigma-Aldrich, Inc., a 1. 6-M hexane solution) were slowly dropped to the suspension at room temperature (10 minutes). The reaction solution was stirred until the metal tellurium completely disappeared (20 minutes). 10.7 Grams (55 mmol) of ethyl-2-bromo-isobutyrate were added to the reaction solution at room temperature, and then the mixture was stirred for 2 hours. After the completion of the reaction, the solvent was concentrated under reduced pressure. Subsequently, the remainder was distilled under reduced pressure. Thus, 8.98 g of yellow oily matter were obtained (59.5 mass% yield).

### Production Example 3 Production of dibutyl ditelluride (DBDT)

Dibutyl ditelluride (DBDT) was obtained in the same manner as in Production Example 1 except that an equivalent molar amount of butyllithium was used instead of methyl lithium in Production Example 1.

### Production Example 4 Production of ethyl-2-methyl-2-methyltellanyl-propionate (MTEE)

6.38 Grams (50 mmol) of metal tellurium [manufactured by Sigma-Aldrich, Inc., trade name "Tellurium" (-40 mesh)] were suspended in 50 ml of THF, and then 52.9 ml (a 1.04-M diethyl ether solution, 55 mmol) of methyllithium (same as described above) were slowly dropped to the suspension at room temperature (10 minutes). The reaction solution was stirred until the metal tellurium completely disappeared (20 minutes). 10.7 Grams (55 mmol) of ethyl-2-bromo-isobutyrate were added to the reaction solution at room temperature, and then the mixture was stirred for 2 hours. After the completion of the reaction, the solvent was concentrated under reduced pressure. Subsequently, the remainder was distilled under reduced pressure. Thus, 6.53 g of yellow oily matter were obtained (51 mass% yield).

### Example 1

### Production of living radical 2-isocyanatoethyl methacrylate (2-IEM) graft SBR with dimethyl ditelluride (DMeDT)

500 Grams of a "PCL/SB Latex 2108 (manufactured by JSR Corporation, total solid content: 40 mass%)" as an SBR latex and 20 g (0.126 mol, 10 mass% of the SBR) of 2-isocyanatoethyl methacrylate (manufactured by Sigma-Aldrich, Inc.) from which a polymerization inhibitor had been removed in advance with an inhibitor remover for t-butyl catechol (manufactured by Sigma-Aldrich, Inc.) as a radically polymerizable monomer were added in advance to 80 ml of water and 1.2 g of an emulsifier (manufactured by Kao Corporation, trade name "EMULGEN 1108") so as to emulsify. The emulsified product was added together with 420 ml of water, and then the contents were stirred at normal temperature for 30 minutes while the air surrounding the contents was replaced with nitrogen. Next, 1.358 g (5 mmol, a five-fold molar amount of a polymerization initiator) of dimethyl ditelluride (DMeDT) obtained in Production Example 1 were added to the mixture. Immediately after that, 164.21 mg (1 mmol) of 2,2'-azobis(2-methylpropionitrile) (AIBN) were added as the polymerization initiator to the mixture, and then the whole was subjected to a reaction at 60°C for 6 hours. Thus, a graft SBR latex was obtained. A 25-mass% salt solution was poured into the latex, and then 1-mass% sulfuric acid was poured into the mixture to coagulate the rubber. The resultant was washed with water and vacuum-dried at 50°C. Thus, a living radical 2-IEM graft SBR of Example 1 was obtained.

### Example 2

### Production of living radical 2-IEM graft SBR with ethyl-2-methyl-2-n-butyltellanyl-propionate (BTEE)

Living radical polymerization was performed in the same manner as in Example 1 except that dimethyl ditelluride (DMeDT) in Example 1 was changed to a five-fold molar amount of AIBN of ethyl-2-methyl-2-n-butyltellanyl-propionate (BTEE) obtained in Production Example 2. Thus, a living radical 2-IEM graft SBR of Example 2 was obtained.

### Example 3

### Production of living radical 2-IEM graft SBR with phenyl-t-butylnitrone (PBN)

Living radical polymerization was performed in the same manner as in Example 1 except that dimethyl ditelluride (DMeDT) and AIBN in Example 1 were changed to 0.2 g of phenyl-t-butylnitrone (PBN). Thus, a living radical 2-IEM graft SBR of Example 3 was obtained.

### Example 4

### Production of living radical 2-IEM graft SBR with ATRP-based polymerization control agent

Living radical polymerization was performed in the same manner as in Example 1 except that dimethyl ditelluride (DMeDT) and AIBN in Example 1 were changed to a mixture of 0.63 g of a transition metal compound (CuBr₂), 0.38 g of 4,4'-dipyridyl, and 0.47 g of ethyl-2-bromo-acetate. Thus, a living radical 2-IEM graft SBR of Example 4 was obtained.

### Example 5

### Production of living radical 2-IEM graft SBR with RAFT-based polymerization control agent

Living radical polymerization was performed in the same manner as in Example 1 except that dimethyl ditelluride (DMeDT) in Example 1 was changed to 0. 144 g of dibenzyltrithiocarbonate. Thus, a living radical 2-IEM graft SBR of Example 5 was obtained.

### Example 6

### Production of living radical 2-IEM graft SBR with 1,1-diphenylethylene (DPE)

Living radical polymerization was performed in the same manner as in Example 1 except that dimethyl ditelluride (DMeDT) in Example 1 was changed to 0.114 g (0.63 mmol) of 1, 1-diphenylethylene (DPE). Thus, a living radical 2-IEM graft SBR of Example 6 was obtained.

### Comparative Example 1

### Production of no-living radical 2-IEM graft SBR

500 Grams of a "PCL/SB Latex 2108 (manufactured by JSR Corporation, total solid content: 40 mass%)" as an SBR latex and 20 g (0.126 mol, 10 mass % of the SBR) of 2-isocyanatoethyl methacrylate (manufactured by Sigma-Aldrich, Inc.) from which a polymerization inhibitor had been removed in advance with an inhibitor remover for t-butyl catechol (manufactured by Sigma-Aldrich, Inc.) as a radically polymerizable monomer were added in advance to 80 ml of water and 1.2 g of an emulsifier (manufactured by Kao Corporation, trade name "EMULGEN 1108") so as to emulsify. The emulsified product was added together with 420 ml of water, and then the contents were stirred at normal temperature for 30 minutes while the air surrounding the contents was replaced with nitrogen. Next, 164.21 mg (1 mmol) of 2,2'-azobis(2-methylpropionitrile) (AIBN) were added as the polymerization initiator to the mixture, and then the whole was subjected to a reaction at 60°C for 6 hours. Thus, a graft SBR latex was obtained. A 25-mass% salt solution was poured into the latex, and then 1-mass% sulfuric acid was poured into the mixture to coagulate the rubber. The resultant was washed with water and vacuum-dried at50°C. Thus, 2-IEM graft SBR of Comparative Example 1 was obtained.

### Reference Example 1

### Production of graft-free styrene-butadiene copolymer (SBR)

A 25-mass% salt solution was poured into a paper-coating latex (PCL) (trade name "PCL/SB Latex 2108 (manufacturedby JSR Corporation, total solid content: 40 mass%)"), and then 1-mass% sulfuric acid was poured into the mixture to coagulate the rubber. The resultant was washed with water and vacuum-dried at 50°C. Thus, a graft-free SBR was obtained.

### Example 7

### Production of living radical α-methylstyrene (α-MeSt) graft SBR with DMeDT

500 Grams of a "PCL/SB Latex 2108 (manufactured by JSR Corporation, total solid content: 40 mass%)" as an SBR latex and 22.7 g of α-methylstyrene (α-MeSt) from which a polymerization inhibitor had been removed in advance with an inhibitor remover for t-butyl catechol (manufactured by Sigma-Aldrich, Inc.) as a radically polymerizable monomer were added in advance to 80 ml of water and 1.2 g of an emulsifier (manufactured by Kao Corporation, trade name "EMULGEN 1108") so as to emulsify. The emulsified product was added together with 420 ml of water, and then the contents were stirred at normal temperature for 30 minutes while the air surrounding the contents was replaced with nitrogen. Next, 1.358 g (5 mmol) of dimethyl ditelluride (DMeDT) obtained in Production Example 1 were added to the mixture. Immediately after that, 308.42 mg (1 mmol) of 2,2'-azobis(2,4-dimethylvaleronitrile) (manufactured by Wako Pure Chemical Industries, Ltd., trade name "V-70") were added as the polymerization initiator to the mixture, and then the whole was subjected to a reaction at 40°C for 6 hours. Thus, a graft SBR latex was obtained. A 25-mass% salt solution was poured into the latex, and then 1-mass% sulfuric acid was poured into the mixture to coagulate the rubber. The resultant was washed with water and vacuum-dried at 50°C. Thus, a living radical α-MeSt graft SBR of Example 7 was obtained.

### Comparative Example 2

### Production of no-living radical α-MeSt graft SBR

500 Grams of a "PCL/SB Latex 2108 (manufactured by JSR Corporation, total solid content: 40 mass%) as an SBR latex and 22.7 g of α-methylstyrene (α-MeSt) from which a polymerization inhibitor had been removed in advance with an inhibitor remover for t-butyl catechol (manufactured by Sigma-Aldrich, Inc.) as a radically polymerizable monomer were added in advance to 80 ml of water and 1.2 g of an emulsifier (manufactured by Kao Corporation, trade name "EMULGEN 1108") so as to emulsify. The emulsified product was added together with 420 ml of water, and then the contents were stirred at normal temperature for 30 minutes while the air surrounding the contents was replaced with nitrogen. Next, 308.42 mg (1 mmol) of 2,2'-azobis(2,4-dimethylvaleronitrile) (manufactured by Wako Pure Chemical Industries, Ltd., trade name "V-70") were added as the polymerization initiator to the mixture, and then the whole was subjected to a reaction at 40°C for 6 hours. Thus, a graft SBR latex was obtained. A 25-mass% salt solution was poured into the latex, and then 1-mass% sulfuric acid was poured into the mixture to coagulate the rubber. The resultant was washed with water and vacuum-dried at 50°C. Thus, an α-MeSt graft SBR of Comparative Example 2 was obtained.

### Example 8

### Production of living radical styrene (St) graft high-cis BR with DMeDT

Loaded into a glass bottle with a rubber stopper having a volume of 100 mL that had been dried and replaced with nitrogen were 7.11 g of a cyclohexane solution (15.2 mass%) of 1,3-butadiene, 0.59 mL of a cyclohexane solution (0. 56 mol/L) of neodymium neodecanoate, 10.32 mL of a toluene solution (3.23 mol/L in terms of an aluminum concentration) of methylaluminoxane MAO (manufactured by Tosoh Akzo Corp., trade name "PMAO"), and 7.77 mL of a hexane solution (0.90 mol/L) of diisobutylaluminum hydride [manufactured by Kanto Chemical Co., Inc.] in the stated order. After the mixture had been ripened at room temperature for 2 minutes, 1.45 mL of a hexane solution (0.95 mol/L) of diethylaluminum chloride [manufactured by Kanto Chemical Co., Inc.] were added to the mixture, and then the whole was ripened at room temperature for 15 minutes while being occasionally stirred. The concentration of neodymium in the catalyst solution thus obtained was 0.11 mol/L (M). Next, a glass bottle with a rubber stopper having a volume of about 900 mL was dried and replaced with nitrogen, and then a cyclohexane solution of 1,3-butadiene that had been dried and refined, and dried cyclohexane were loaded into the glass bottle so that a state in which 400 g of a 12.5-mass% cyclohexane solution of 1,3-butadiene were charged was established. Next, 2.28 mL (0.025 mmol in terms of neodymium) of the catalyst solution prepared in the foregoing was charged into the glass bottle, and then polymerization was performed in a warm water bath at 50°C for 1.0 hour.

Next, 23. 5 equivalents (based on neodymium) of a hexane solution (1.0 mol/L) of 3-glycidoxypropyltrimethoxysilane were loaded as a primary modifier to the mixture, and then the whole was treated at 50°C for 60 minutes. Subsequently, 1.2 mL of sorbitan trioleate [manufactured by Kanto Chemical Co., Inc.] were added alone to the resultant, and then the mixture was further subjected to a modification reaction at 50°C for 1 hour. After that, 2 mL of isopropanol were added to the polymerization system to terminate the reaction. Thus, a hexane solution of a modified high-cis polybutadiene rubber (modified high-cis BR) having a high cis-1,4-bond content was obtained.

Hexane was volatilized at room temperature until the BR concentration of the solution was 50 mass%. After that, 350 ml of water and 3 g (6 mass% of the BR amount) of an emulsifier (EMULGEN 1108, manufactured by Kao Corporation) were added to 100 g of the solution, and then the mixture was stirred for 30 minutes at room temperature so as to emulsify. An emulsified product prepared as described below was added to the emulsified solution together with 130 ml of water. 5 Grams (10 mass% of the BR amount) of styrene (manufactured by Kanto Chemical Co., Inc.) from which a polymerization inhibitor had been removed in advance with an inhibitor remover for t-butyl catechol (manufactured by Sigma-Aldrich, Inc.) as a radically polymerizable monomer were added in advance to 20 ml of water and 0.3 g of an emulsifier (EMULGEN 1108, manufactured by Kao Corporation). The contents were stirred at normal temperature for 30 minutes while the air surrounding the contents was replaced with nitrogen.

Next, 1.358 g (5 mmol, a five-fold molar amount of a polymerization initiator) of dimethyl ditelluride (DMeDT) obtained in Production Example 1 were added to the mixture. Immediately after that, 41.05 mg (0.25 mmol) of 2,2'-azobis(2-methylpropionitrile) (AIBN) were added as the polymerization initiator to the mixture, and then the whole was subjected to a reaction at 60°C for 6 hours. Thus, a graft BR latex was obtained. A 25-mass% salt solution was poured into the latex, and then 1-mass% sulfuric acid was poured into the mixture to coagulate the rubber. The resultant was washed with water and vacuum-dried at 50°C. Thus, a living radical St graft high-cis BR of Example 8 was obtained.

### Comparative Example 3

### Production of no-living radical St graft high-cis BR

An St graft high-cis BR of Comparative Example 3 was obtained in the same manner as in Example 8 except that dimethyl ditelluride (DMeDT) was not added.

### Reference Example 2

### Graft-free modified high-cis BR

A graft-free modified high-cis BR was obtained without subjecting a hexane solution of the modified high-cis polybutadiene rubber (modified high-cis BR) having a high cis-1,4-bond content obtained in Example 8 to radical graft polymerization, and further, by performing recrystallization in isopropanol containing a trace amount of 2,2'-methylenebis(4-ethyl-6-tert-butylphenol) (manufactured by Ouchi Shinko Chemical Industrial Co., Ltd., trade name "NOCRAC NS-5"), followed by drum drying.

### Example 9

### Method of producing living radical acrylic acid (AA) graft terminal-modified SBR with DMeDT

Added to an 800-mL pressure-proof glass container that had been dried and replaced with nitrogen were 300 g of cyclohexane, 40 g of 1,3-butadiene, 14 g of styrene, 0.2 mmol of ditetrahydrofurylpropane, and 0.48 mmol) of hexamethyleneimine (HMI). Further, 0.48 mmol of n-butyllithium (n-BuLi) was added to the container. After that, a polymerization reaction was performed at 50°C for 1.5 hours. A polymerization conversion degree at this time was nearly 100%. Next, 0.12 mmol of tin tetrachloride was forthwith added as a modifier to the polymerization reaction system, and further, a modification reaction was performed at 50°C for 30 minutes. After that, 0. 5 mL of isopropanol was added to the polymerization reaction system to terminate the polymerization reaction. Thus, a cyclohexane solution of a tin tetrachloride terminal-modified SBR was obtained.

Hexane was volatilized at room temperature until the SBR concentration of the cyclohexane solution was 50 mass%. After that, 350 ml of water and 3 g (6 mass% of the SBR amount) of an emulsifier (manufactured by Kao Corporation, trade name "EMULGEN 1108") were added to 100 g of the solution, and then the mixture was stirred for 30 minutes at room temperature so as to emulsify. An emulsified product prepared as described below was added to the emulsified solution together with 130 ml of water. 5 Grams (0.07 mol, 10 mass% of the SBR amount) of acrylic acid (AA, manufactured by Kanto Chemical Co., Inc.) which had been distilled under reduced pressure as a radically polymerizable monomer were added in advance to 20 ml of water and 0.3 g of an emulsifier (EMULGEN 1108, manufactured by Kao Corporation). The contents were stirred at normal temperature for 30 minutes while the air surrounding the contents was replaced with nitrogen.

Next, 0.679 g (2.5 mmol, a ten-fold molar amount of a polymerization initiator) of dimethyl ditelluride (DMeDT) obtained in Production Example 1 was added to the mixture. Immediately after that, 60.55 mg (0.25 mmol) of benzoyl peroxide (BPO, manufactured by Sigma-Aldrich, Inc.) were added as the polymerization initiator to the mixture, and then the whole was subjected to a reaction at 70°C for 6 hours. Thus, a graft SBR latex was obtained. A 25-mass% salt solution was poured into the latex, and then 1-mass% sulfuric acid was poured into the mixture to coagulate the rubber. The resultant was washed with water and vacuum-dried at 50°C. Thus, a living radical AA graft terminal-modified SBR was obtained.

### Comparative Example 4

### Method of producing no-living radical AA graft terminal-modified SBR (initiator: BPO)

An AA graft terminal-modified SBR of Comparative Example 4 was obtained in the same manner as in Example 9 except that dimethyl ditelluride (DMeDT) was not added.

### Example 10

### Method of producing acrylamide (AAM) graft terminal-modified SBR with DMeDT

Living radical graft polymerization was performed in the same manner as in Example 9 except the following, and as a result, a living radical acrylamide (AAM) graft terminal-modified SBR was obtained. In Example 10, 5 g of AAM purified by recrystallization were used instead of acrylic acid serving as a radically polymerizable monomer. Further, 19 mg of tetraethylenepentamine (TEPA) were added immediately after the addition of 0.679 g (2.5 mmol, a ten-fold molar amount of the polymerization initiator) of dimethyl ditelluride (DMeDT) and before the loading of the polymerization initiator. In addition, 38 mg (0.25 mmol) of cumene hydroperoxide (CHP, manufactured by Sigma-Aldrich, Inc.) were used instead of BPO as the polymerization initiator. In addition, a polymerization temperature was set to 5°C.

### Comparative Example 5

### Method of producing no-living radical AAM graft terminal-modified SBR

An AAM graft terminal-modified SBR of Comparative Example 4 was obtained in the same manner as in Example 10 except that dimethyl ditelluride (DMeDT) was not added.

### Example 11

### Method of producing AAM graft terminal-modified SBR with DMeDT

Living radical graft polymerization was performed in the same manner as in Example 9 except the following, and as a result, a living radical acrylamide (AAM) graft terminal-modified SBR was obtained. In Example 11, 5 g of AAM purified by recrystallization were used instead of acrylic acid serving as a radically polymerizable monomer. Further, 0.06 ml (0.403 mmol) of tetramethylethylenediamine [TMEDA, manufactured by TOKYO CHEMICAL INDUSTRY CO., LTD.] were added immediately after the addition of 0.679 g (2.5 mmol, a ten-fold molar amount of the polymerization initiator) of dimethyl ditelluride (DMeDT) and before the loading of the polymerization initiator. In addition, 57 mg (0.25 mmol) of ammonium persulfate (AP, manufactured by Sigma-Aldrich, Inc.) were used instead of BPO as the polymerization initiator. In addition, a polymerization temperature was set to 5°C.

### Comparative Example 6

### Method of producing no-living radical AAM graft terminal-modified SBR

An AAM graft terminal-modified SBR of Comparative Example 6 was obtained in the same manner as in Example 11 except that dimethyl ditelluride (DMeDT) was not added.

### Reference Example 3

### Method of producing graft-free tin tetrachloride terminal-modified SBR

A graft-free tin tetrachloride terminal-modified SBR was obtained without subjecting the cyclohexane solution of the tin tetrachloride terminal-modified SBR obtained in Example 9 to radical graft polymerization, and further, by drying the solution in accordance with an ordinary method.

### Example 12

### Method of producing living radical 2-vinylpyridine (2-VP) graft NR with BTEE

A field latex was centrifuged with a latex separator [manufactured by Saito Separator Limited] at a number of revolutions of 7,500 rpm. Thus, a concentrated latex having a dry rubber concentration of 60 mass% was obtained. 1,000 Grams of the concentrated latex were loaded into a stainless reaction vessel provided with a stirring machine and a temperature control jacket, and then an emulsified product prepared as described below was added to the reaction vessel together with 990 mL of water. 10 Milliliters of water and 90 mg of an emulsifier (manufactured by Kao Corporation, trade name "EMULGEN 1108") were added in advance to 1.7 g of 2-vinylpyridine (2-VP) from which a polymerization inhibitor had been removed in advance with an inhibitor remover for t-butyl catechol (manufactured by Sigma-Aldrich, Inc.). The contents were stirred at normal temperature for 30 minutes while the air surrounding the contents was replaced with nitrogen.

Next, 38.0 g (133 mmol, a ten-fold molar amount of tert-butyl hydroperoxide (tBuHp)) of BTEE obtained in Production Example 2 were added to the resultant. Immediately after that, 1.2 g (13.3 mmol) of tBuHp as a polymerization initiator and 1.2 g of tetraethylenepentamine (TEPA) were added to the mixture, and then the whole was subjected to a reaction at 40°C for 30 minutes. Thus, a modified natural rubber latex was obtained.

Formic acid was added to the modified natural rubber latex to adjust the pH to 4.7. Thus, the modified natural rubber latex was coagulated. The resultant solid was treated with a scraper five times, and was then passed through a shredder so as to be turned into crumbs. After that, the crumbs were dried with a hot air dryer at 110 °C for 210 minutes. Thus, a living radical 2-VP graft NR of Example 12 was obtained.

### Comparative Example 7

### Method of producing no-living radical 2-VP graft NR

A 2-VP graft NR of Comparative Example 7 was obtained in the same manner as in Example 12 except that BTEE was not added.

### Example 13

### Method of producing living radical allyl-tri-n-butyltin (AllylSn) graft NR with BTEE

A living radical allyl-tri-n-butyltin (AllylSn) graft NR was obtained in the same manner as in Example 12 except that 5.5 g of allyl-tri-n-butyltin (AllylSn) from which a polymerization inhibitor had been removed in advance with an inhibitor remover for t-butyl catechol (manufactured by Sigma-Aldrich, Inc.) were added as a radically polymerizable monomer instead of 1.7 g of 2-vinylpyridine (2-VP) in Example 12.

### Comparative Example 8

### Method of producing no-living radical allyl-tri-n-butyltin (AllylSn) graft NR

An allyl-tri-n-butyltin (AllylSn) graft NR of Comparative Example 8 was obtained in the same manner as in Example 13 except that BTEE was not added.

### Example 14

### Method of producing living radical γ-methacryloxypropyltrimethoxysilane (MPTMS) graft NR with BTEE

A living radical γ-methacryloxypropyltrimethoxysilane (MPTMS) graft NR was obtained in the same manner as in Example 12 except that 4.1 g of MPTMS (manufactured by Gelest, Inc., FW: 248.35) from which a polymerization inhibitor had been removed in advance with an inhibitor remover for t-butyl catechol (manufactured by Sigma-Aldrich, Inc.) were added as a radically polymerizable monomer instead of 1.7 g of 2-vinylpyridine (2-VP) in Example 12.

Comparative Example 9

### Method of producing no-living radical MPTMS graft NR

An MPTMS graft NR of Comparative Example 9 was obtained in the same manner as in Example 14 except that BTEE was not added.

Example 15

### Method of producing living radical 2-hydoxyethylmethacrylate (HEMA) graft NR having large loading amount of radically polymerizable monomer with BTEE

A living radical 2-hydoxyethyl methacrylate (HEMA) graft NR having a large loading amount of HEMA of Example 15 was obtained in the same manner as in Example 12 except the following. In Example 15, 90 mg of an emulsifier (manufactured by Kao Corporation, trade name "EMULGEN 1108"), 1. 7 g of 2-vinylpyridine (2-VP), 1.2 g (13.3 mmol) of tert-butyl hydroperoxide (tBuHp), and 1.2 g of tetraethylenepentamine (TEPA) were changed to 1 g of the emulsifier (manufactured by Kao Corporation, trade name "EMULGEN 1108"), 30 g of HEMA from which a polymerization inhibitor had been removed in advance with an inhibitor remover for t-butyl catechol (manufactured by Sigma-Aldrich, Inc.), 17 g of tBuHp, and 17 g of

### TEPA.

Comparative Example 10

### Method of producing no-living radical HEMA graft NR having large loading amount of HEMA

An HEMA graft NR of Comparative Example 10 was obtained in the same manner as in Example 15 except that BTEE was not added.

### Example 16

### Method of producing living radical 2-hydroxyethyl methacrylate (HEMA) graft NR with BTEE

A living radical HEMA graft NR was obtained in the same manner as in Example 12 except that 2.1 g of HEMA from which a polymerization inhibitor had been removed in advance with an inhibitor remover for t-butyl catechol (manufactured by Sigma-Aldrich, Inc.) were added as a radically polymerizable monomer instead of 1.7 g of 2-vinylpyridine (2-VP) in Example 12.

### Comparative Example 11

### Method of producing no-living radical HEMA graft NR

An HEMA graft NR of Comparative Example 11 was obtained in the same manner as in Example 16 except that BTEE was not added.

### Example 17

### Method of producing living radical N,N-diethylaminoethyl methacrylate (DEAEMA) graft NR with BTEE

A living radical DEAEMA graft NR was obtained in the same manner as in Example 12 described above except that 3. 0 g of DEAEMA distilled under reduced pressure were added as a radically polymerizable monomer instead of 1.7 g of 2-vinylpyridine (2-VP) in Example 12.

### Comparative Example 12

### Method of producing no-living radical DEAEMA graft NR

An DEAEMA graft NR of Comparative Example 12 was obtained in the same manner as in Example 17 except that BTEE was not added.

### Example 18

### Method of producing living radical 2-IEM graft modified NR with DMeDT

A field latex was centrifuged with a latex separator [manufactured by Saito Separator Limited] at a number of revolutions of 7,500 rpm. Thus, a concentrated latex having a dry rubber concentration of 60 mass% was obtained. 1,000 Grams of the concentrated latex were loaded into a stainless reaction vessel provided with a stirring machine and a temperature control jacket, and then an emulsified product prepared as described below was added to the reaction vessel together with 920 mL of water. 80 Milliliters of water and 1. 2 mg of an emulsifier (manufactured by Kao Corporation, trade name "EMULGEN 1108") were added in advance to 48 g (0.302 mol, 8 mass% of NR) of 2-isocyanatoethyl methacrylate (2-IEM) from which a polymerization inhibitor had been removed in advance with an inhibitor remover for t-butyl catechol (manufactured by Sigma-Aldrich, Inc.) as a radically polymerizable monomer. The contents were stirred at normal temperature for 30 minutes while the air surrounding the contents was replaced with nitrogen.

Next, 3.259 g (12 mmol, a five-fold molar amount of a polymerization initiator) of dimethyl ditelluride (DMeDT) obtained in Production Example 1 were added to the resultant. Immediately after that, 394 mg (2. 4 mmol) of AIBN as the polymerization initiator were added to the mixture, and then the whole was subjected to a reaction at 60°C for 30 minutes. Thus, a modified natural rubber latex was obtained.

Formic acid was added to the modified natural rubber latex to adjust the pH to 4.7. Thus, the modified natural rubber latex was coagulated. The resultant solid was treated with a scraper five times, and was then passed through a shredder so as to be turned into crumbs. After that, the crumbs were dried with a hot air dryer at 110°C for 210 minutes. Thus, a living radical 2-IEM graft NR of Example 18 was obtained.

### Comparative Example 13

### Method of producing no-living radical 2-IEM graft modified NR

A DEAMA graft NR of Comparative Example 13 was obtained in the same manner as in Example 18 except that DMeDT was not added.

### Example 19

### Method of producing living radical acrylic acid (AA) graft NR with dibutyl ditelluride (DBDT)

A field latex was centrifuged with a latex separator [manufactured by Saito Separator Limited] at a number of revolutions of 7,500 rpm. Thus, a concentrated latex having a dry rubber concentration of 60 mass% was obtained. 1,000 Grams of the concentrated latex were loaded into a stainless reaction vessel provided with a stirring machine and a temperature control jacket, and then an emulsified product prepared as described below was added to the reaction vessel together with 920 mL of water. 80 Milliliters of water and 1. 2 mg of an emulsifier (manufactured by Kao Corporation, trade name "EMULGEN 1108") were added in advance to 48 g (0.667 mol) of acrylic acid from which a polymerization inhibitor had been removed in advance with an inhibitor remover for t-butyl catechol (manufactured by Sigma-Aldrich, Inc.) as a radically polymerizable monomer. The contents were stirred at normal temperature for 30 minutes while the air surrounding the contents was replaced with nitrogen.

Next, 3.259 g (12 mmol, a five-fold molar amount of a polymerization initiator) of dibutyl ditelluride (DBDT) obtained in Production Example 3 were added to the resultant. Immediately after that, 740 mg (2.4 mmol) of 2,2-azobis(2,4-dimethylvaleronitrile) (Wako Pure Chemical Industries, Ltd., trade name "V-70") as the polymerization initiator were added to the mixture, and then the whole was subjected to a reaction at 40°C for 30 minutes. Thus, a modified natural rubber latex was obtained.

Formic acid was added to the modified natural rubber latex to adjust the pH to 4.7. Thus, the modified natural rubber latex was coagulated. The resultant solid was treated with a scraper five times, and was then passed through a shredder so as to be turned into crumbs. After that, the crumbs were dried with a hot air dryer at 110°C for 210 minutes. Thus, a living radical AA graft NR of Example 19 was obtained.

Comparative Example 14

### Method of producing no-living radical AA graft NR

An AA graft NR of Comparative Example 14 was obtained in the same manner as in Example 19 except that DBDT was not added.

### Example 20

### Method of producing living radical acrylic acid (AA) graft NR with ethyl-2-methyl-2-methyltellanyl-propionate (MTEE)

Living radical graft polymerization was performed in the same manner as in Example 19 except the following, and as a result, a living radical AA graft NR was obtained. In Example 20, 3.091 g (12 mmol, a five-fold molar amount of a polymerization initiator) of ethyl-2-methyl-2-methyltellanyl-propionate (MTEE) obtained in Production Example 4 were used instead of DBDT. In addition, 547 mg (2.4 mmol) of ammonium persulfate (AP) and 0.576 ml (3.866 mmol) of tetramethylethylenediamine (TMEDA, manufactured by TOKYO CHEMICAL INDUSTRY CO., LTD.) were used instead of the polymerization initiator V-70. In addition, a polymerization temperature was set to 5°C.

### Comparative Example 15

### Method of producing no-living radical AA graft NR

An AA graft NR of Comparative Example 15 was obtained in the same manner as in Example 20 except that MTEE was not added.

### Reference Example 4

### Production of unmodified natural rubber (NR)

Formic acid was added to a field latex to adjust the pH to 4.7. Thus, the latex was coagulated. Further, the resultant solid was treated with a scraper five times, and was then passed through a shredder so as to be turned into crumbs. Thus, an unmodified natural rubber (NR) was obtained.

The graft copolymers of Examples 1 to 20 and Comparative Examples 1 to 15 obtained as described above were evaluated for their graft amounts and toluene insoluble contents. In addition, the rubbers of Reference Examples 1 to 4 were evaluated for their toluene insoluble contents.

Further, 78 kinds of rubber compositions each having the blending composition shown in Table 2 were prepared by using the graft copolymers and graft-free rubbers of Examples 1 to 20, Comparative Examples 1 to 15, and Reference Examples 1 to 4.

The Mooney viscosity ML₁₊₄ (130°C) of each of the rubber compositions was measured. In addition, each of the rubber compositions was vulcanized under the conditions of 145°C and 33 minutes, and then the tensile stress at break (TSb) and loss tangent (tanδ) of the vulcanized rubber were measured. Table 1 shows the results.

### [Table 1]

**Table 1-1**

| | Production of graft copolymers and the like, and structures and properties of the resultant copolymers and the like | | | | | | | | Carbon black-blended composition | | | Silica-blended composition | | |
|---|---|---|---|---|---|---|---|---|---|---|---|---|---|---|
| | Polymer main chain (Latex) | Graft polymerization initiator | Polymerization control agent | Kind of radically polymerizable monomer | Graft polymerization temperature (°C) | Graft loading amount¹⁾ | Graft amount | Toluene insoluble content (mass%) | Loss tangent tanδ | Tensile stress at break TSb | Mooney viscosity ML₁₊₄ | Loss tangent tanδ | Tensile stress at break TSb | Mooney viscosity ML₁₊₄ |
| Example 1 | SBR²⁾ | AIBN | DMeDT | 2-IEM | 60 | 10 | 9.6 | 3.0 | 0.170 | 24.2 | 58 | 0.110 | 19.2 | 65 |
| Example 2 | | | BTEE | | 60 | 10 | 9.8 | 3.0 | 0.168 | 24.3 | 59 | 0.108 | 19.4 | 68 |
| Example 3 | | None | PBN | | 60 | 10 | 8.0 | 15.0 | 0.174 | 23.1 | 61 | 0.113 | 18.8 | 71 |
| Example 4 | | | ATRP | | 60 | 10 | 8.2 | 10.0 | 0.175 | 23.5 | 61 | 0.111 | 19.1 | 69 |
| Example 5 | | AIBN | RAFT | | 60 | 10 | 8.5 | 12.8 | 0.171 | 23.2 | 60 | 0.109 | 18.7 | 70 |
| Example 6 | | | DPE | | 60 | 10 | 9.0 | 10.7 | 0.173 | 23.3 | 60 | 0.108 | 19.0 | 68 |
| Comparative Example 1 | | | None | | 60 | 10 | 7.4 | 18.0 | 0.181 | 22.8 | 62 | 0.121 | 18.5 | 73 |
| Reference Example 1 | | None | None | None | - | 0 | 0 | 0 | 0.220 | 22.4 | 56 | 0.145 | 17.9 | 60 |
| Example 7 | SBR²⁾ | V-70 | DMeDT | α-MeSt | 40 | 11.35 | 10.0 | 1.1 | 0.246 | 23.5 | 57 | - | - | - |
| Comparative Example 2 | | | None | | 40 | 11.35 | 7.0 | 16.2 | 0.245 | 21.4 | 65 | - | - | - |
| Example 8 | Modified NdBR³⁾ | AIBN | DMeDT | St | 60 | 10 | 9.9 | 2.3 | 0.138 | 23.2 | 57 | 0.133 | 21.0 | 74 |
| Comparative Example 3 | | | None | | 60 | 10 | 7.0 | 16.5 | 0.140 | 22.1 | 61 | 0.132 | 19.5 | 77 |
| Reference Example 2 | | None | None | None | - | 0 | 0 | 0.5 | 0.135 | 18.5 | 65 | 0.124 | 20.5 | 73 |
| Example 9 | Modified SBR⁴⁾ | BPO | DMeDT | AA | 70 | 6 | 5.0 | 6.1 | 0.127 | 19.8 | 52 | 0.130 | 19.2 | 41 |
| Comparative Example 4 | | | None | | 70 | 6 | 4.5 | 28.4 | 0.128 | 18.8 | 57 | 0.135 | 18.5 | 45 |
| Example 10 | | CHP + TEPA | DMeDT | AAM | 5 | 10 | 8.9 | 1.2 | 0.115 | 21.0 | 53 | 0.128 | 19.5 | 40 |
| Comparative Example 5 | | | None | | 5 | 10 | 7.2 | 9.2 | 0.118 | 20.5 | 59 | 0.133 | 18.8 | 47 |
| Example 11 | | AP + TMEDA | DMeDT | | 5 | 10 | 9.2 | 1.5 | 0.113 | 21.5 | 53 | 0.126 | 19.8 | 42 |
| Comparative Example 6 | | | None | | 5 | 10 | 7.0 | 6.9 | 0.120 | 20.8 | 57 | 0.135 | 19.0 | 45 |
| Reference Example 3 | | None | None | None | - | 0 | 0 | 0.4 | 0.131 | 20.2 | 51 | 0.140 | 18.1 | 41.5 |

### [Remarks]

ATRP: CuBr₂/4,4'-Dipyridyl/2-ethyl bromoacetate
RAFT: Dibenzyltrithiocarbonate

### [Table 2]

**Table 1-2**

| | Production of graft copolymers and the like, and structures and properties of the resultant copolymers and the like | | | | | | | | Carbon black-blended composition | | | Silica-blended composition | | |
|---|---|---|---|---|---|---|---|---|---|---|---|---|---|---|
| | Polymer main chain (Latex) | Graft polymerization initiator | Polymerization control agent | Kind of radically polymerizable monomer | Graft polymerization temperature (°C) | Graft loading amount¹⁾ | Graft amount | Toluene insoluble content (mass%) | Loss tangent tanδ | Tensile stress at break TSb | Mooney viscosity ML₁₊₄ | Loss tangent tanδ | Tensile stress at break TSb | Mooney viscosity ML₁₊₄ |
| Example 12 | NR⁵⁾ | tBuHP + TEPA | BTEE | 2-VP | 40 | 0.283 | 0.283 | 0.5 | 0.148 | 27.5 | 73 | 0.110 | 25.3 | 86 |
| Comparative Example 7 | | | None | | 40 | 0.283 | 0.283 | 5.2 | 0.150 | 27.0 | 75 | 0.113 | 24.7 | 87 |
| Example 13 | | | BTEE | AllylSn | 40 | 0.917 | 0.917 | 2.2 | 0.143 | 27.5 | 74 | - | - | - |
| Comparative Example 8 | | | None | | 40 | 0.917 | 0.917 | 7.4 | 0.145 | 27.1 | 79 | - | - | - |
| Example 14 | | | BTEE | MPTMS | 40 | 0.683 | 0.683 | 3.1 | - | - | - | 0.100 | 25.4 | 88 |
| Comparative Example 9 | | | None | | 40 | 0.683 | 0.683 | 9.4 | - | - | - | 0.102 | 25.1 | 90 |
| Example 15 | | | BTEE | HEMA | 40 | 5 | 4.2 | 4.0 | 0.178 | 26.9 | 75 | 0.097 | 26.0 | 87 |
| Comparative Example 10 | | | None | | 40 | 5 | 3.5 | 20 | 0.180 | 23.5 | 85 | 0.100 | 22.4 | 95 |
| Example 16 | | | BTEE | | 40 | 0.35 | 0.35 | 1.8 | - | - | - | 0.104 | 26.5 | 87 |
| Comparative Example 11 | | | None | | 40 | 0.35 | 0.35 | 5.2 | - | - | - | 0.105 | 25.2 | 89 |
| Example 17 | | | BTEE | DEAEMA | 40 | 0.5 | 0.5 | 2.8 | 0.149 | 27.5 | 74 | 0.099 | 26.1 | 86 |
| Comparative Example 12 | | | None | | 40 | 0.5 | 0.5 | 6.5 | 0.153 | 27.2 | 78 | 0.101 | 25.0 | 90 |
| Example 18 | | AIBN | DMeDT | 2-IEM | 60 | 8 | 7.1 | 2.7 | 0.127 | 26.8 | 74 | 0.083 | 25.6 | 89 |
| Comparative Example 13 | | | None | | 60 | 8 | 6.4 | 25 | 0.132 | 24.3 | 78 | 0.088 | 23.9 | 96 |
| Example 19 | | V-70 | DBDT | AA | 40 | 8 | 7.4 | 1.4 | - | - | - | 0.090 | 26.1 | 88 |
| Comparative Example 14 | | | None | | 40 | 8 | 6.6 | 16 | - | - | - | 0.094 | 24.2 | 92 |
| Example 20 | | AP + TMEDA | MTEE | | 5 | 8 | 7.2 | 0.6 | - | - | - | 0.091 | 24.3 | 87 |
| Comparative Example 15 | | | None | | 5 | 8 | 6.0 | 6.2 | - | - | - | 0.096 | 24.7 | 90 |
| Reference Example 4 | | None | None | None | - | 0 | 0 | 0 | 0.181 | 25.1 | 73 | 0.130 | 23.7 | 86 |

| | | | | | | | | | | | | | | |
|---|---|---|---|---|---|---|---|---|---|---|---|---|---|---|
| [Notes] (1) Graft loading amount: the loading amount (mass%) of the radically polymerizable monomer based on the rubber component in the graft copolymer (the main chain component excluding the graft component of the graft copolymer) (2) SBR: styrenebutadiene copolymer (3) Modified NdBR: neodymium-based catalyst-modified high cis polybutadiene rubber (4) Modified SBR: terminally modified styrene-butadiene copolymer (5) NR: natural rubber | | | | | | | | | | | | | | |

### [Table 3]

**Table 2**

| | Carbon black-blended composition | Silica-blended composition |
|---|---|---|
| (Co)polymer^{*1} | 100 | 100 |
| Carbon black^{*2} | 50 | - |
| Silica^{*3} | - | 55 |
| Silane coupling agent ^{*4} | - | 5.5 |
| Aromatic oil | 5 | 10 |
| Stearic acid | 2 | 2 |
| Antioxidant 6C^{*5} | 1 | 1 |
| Zinc oxide | 3 | 3 |
| Vulcanization-accelerati ng agent DM^{*6} | 0.8 | 1 |
| Vulcanization-accelerati ng agent DG^{*7} | 0.5 | 1 |
| Vulcanization-accelerati ng agent NS^{*8} | 0.8 | 1 |
| Sulfur | 1 | 1.5 |

| | | |
|---|---|---|
| [Notes] ^{*}1 Graft copolymers of Examples 1 to 20 and Comparative Examples 1 to 15, and graft-free rubbers of Reference Examples 1 to 4 ^{*}2 Carbon black: N339 carbon black (N₂SA=₉₂ m²/g) ^{*}3 Silica: "Nipseal AQ" (trademark), manufactured by TOSOH SILICA CORPORATION ^{*}4 Silane coupling agent: "Si69" (trademark), bis(3-triethoxysilylpropyl)tetrasulfide, manufactured by Degussa ^{*}5 Antioxidant 6C: N-(1,3-dimethylbutyl)-N'-phenyl-p-phenylenediamine *6 Vulcanization-accelerating agent DM: dibenzothiazyl disulfide *7 Vulcanization-accelerating agent DG: diphenylguanidine *8 Vulcanization-accelerating agent NS: N-t-butyl-2-benzothiazyl sulfenamide | | |

The following facts can be understood from Table 1. Examples 1 to 11 are not invention examples. Each of the living radical graft copolymers of Examples 1 to 20 obtained by the living radical graft polymerization has a much smaller toluene insoluble content (gel amount) than that of the corresponding one of the radical graft copolymers of Comparative Examples 1 to 15 obtained by the ordinary radical graft polymerization. In addition, each of the living radical graft copolymers of Examples 1 to 20 reduced the Mooney viscosity of each of the carbon black-blended composition and the silica-blended composition to a larger extent than the corresponding one of the radical graft copolymers of Comparative Examples 1 to 15 did. In addition, each of the compositions had a reduced loss tangent (tanδ), exerted additionally excellent low heat generating property, and showed improvements in its tensile stress at break (TSb) and fracture characteristic.

In addition, each of the living radical graft copolymers of Examples 1 to 20 had a reduced loss tangent (tanδ) and an improved tensile stress at break (TSb) as compared with the corresponding one of the graft-free rubbers of Reference Examples 1 to 4.

### Industrial Applicability

According to the method of producing a graft copolymer of the present invention, a modified rubber capable of providing a rubber composition excellent in low heat generating property, wear resistance, and fracture characteristic, and a tire by extension, can be efficiently produced by subjecting a radically polymerizable monomer to living radical graft polymerization with a natural rubber.

## Claims

1. A method of producing a graft copolymer, the method comprising subjecting a radically polymerizable monomer to living radical graft polymerization with a rubber component formed of a natural rubber in an aqueous medium in the presence of a polymerization control agent.

2. The method of producing a graft copolymer according to claim 1, wherein the polymerization control agent is selected from a stable free radical-forming compound, an atom transfer radical polymerization agent, a reversible addition-fragmentation chain transfer agent, an iniferter, an organotellurium compound, and an organoiodine compound.

3. The method of producing a graft copolymer according to claim 1 or 2, wherein the polymerization control agent is inert to water.

4. The method of producing a graft copolymer according to claim 2 or 3, wherein the polymerization control agent comprises an organotellurium compound.

5. The method of producing a graft copolymer according to claim 4, wherein the polymerization control agent comprises an organotellurium compound (I) represented by a general formula (1) : 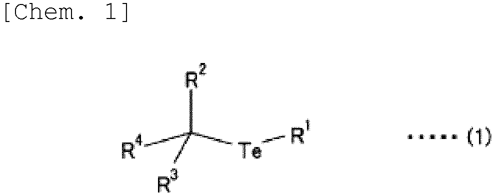
where R¹ represents an alkyl group having 1 to 8 carbon atoms, an aryl group, a substituted aryl group, or an aromatic heterocyclic group, R² and R³ each independently represent a hydrogen atom or an alkyl group having 1 to 8 carbon atoms, and R⁴ represents an aryl group, a substituted aryl group, an aromatic heterocyclic group, an acyl group, an oxycarbonyl group, or a cyano group, and/or an organotellurium compound (II) represented by a general formula (2) :
(R⁵Te)₂ (2)
where R⁵ represents an alkyl group having 1 to 8 carbon atoms, an aryl group, a substituted aryl group, or an aromatic heterocyclic group, and two R⁵'s may be identical to or different from each other.

6. The method of producing a graft copolymer according to any one of claims 1 to 5, wherein a polymerization initiator is used together with the polymerization control agent.

7. The method of producing a graft copolymer according to any one of claims 1 to 6, wherein the radically polymerizable monomer to be subjected to the living radical graft polymerization comprises a compound having, in a molecule thereof, at least one functional group containing at least one kind selected from a nitrogen atom, an oxygen atom, a sulfur atom, a halogen atom, and a metal atom, or an aromatic vinyl compound.

8. The method of producing a graft copolymer according to claim 7, wherein the functional group comprises an isocyanate group, a thioisocyanate group, an amino group, an imino group, a sulfone group, a hydroxy group, a carboxy group, a thiocarboxy group, a carbonyl group, a thiocarbonyl group, a formyl group, a thioformyl group, a silanol group, a hydrocarbyloxy group, a nitrile group, a pyridyl group, an amide group, an imide group, an imidazolyl group, an ammonium group, a hydrazo group, an azo group, a diazo group, a ketimine group, an epoxy group, a thioepoxy group, an oxycarbonyl group or an ester bond, a carbonylthio group or a thioester bond, an oxy group or an ether bond, a glycidoxy group, a sulfide group or a thioether bond, a disulfide group, a mercapto group, a hydrocarbylthio group, a sulfonyl group, a sulfinyl group, an imine residue, another nitrogen-containing heterocyclic group, an oxygen-containing heterocyclic group, a sulfur-containing heterocyclic group, a hydrocarbyloxysilylgroup, an organotin group, a chlorine atom, or a bromine atom.

9. The method of producing a graft copolymer according to claim 7, wherein the aromatic vinyl compound is at least one selected from the group consisting of styrene, α-methylstyrene, 1-vinylnaphthalene, 3-vinyltoluene, ethylvinyl benzene, divinyl benzene, 4-cyclohexylstyrene, 2,4,6-trimethylstyrene, p-tert-butyl-a-methylstyrene and p-tert-butylstyrene.

10. The method of producing a graft copolymer according to any one of claims 1 to 9, wherein a graft amount of the radically polymerizable monomer is 0.1 to 20 mass% based on the rubber component in the graft copolymer.

11. The method of producing a graft copolymer according to claim 10, wherein a graft amount of the radically polymerizable monomer is 0.5 to 10 mass% based on the rubber component in the graft copolymer.

12. The method of producing a graft copolymer according to any one of claims 1 to 11, wherein the living radical graft polymerization is performed in the presence of a surfactant and/or a dispersant.

13. A graft copolymer latex obtained by the method according to any one of claims 1 to 12.

14. A graft copolymer obtained by coagulating and drying the graft copolymer latex according to claim 13.

15. l A rubber composition, comprising the graft copolymer according to claim 14.

16. The rubber composition according to claim 15, comprising:
(A) a rubber component containing the graft copolymer; and
(B) carbon black and/or an inorganic filler at a ratio of 5 to 100 parts by mass based on 100 parts by mass of the rubber component.

17. The rubber composition according to claim 16, further comprising a silane coupling agent at a ratio of 1 to 20 mass% based on the inorganic filler.

18. A tire using the rubber composition according to any one of claims 15 to 17 in any one of tire members thereof.

## Patentansprüche

1. Verfahren zur Herstellung eines Pfropfcopolymers, wobei das Verfahren das Unterwerfen eines radikalpolymerisierbaren Monomers einer lebenden Radikalpfropfpolymerisation mit einer Kautschukkomponente umfasst, die aus einem Naturkautschuk in einem wässrigen Medium in Gegenwart eines Polymerisationsreguliermittels gebildet wird.

2. Verfahren zur Herstellung eines Pfropfcopolymers nach Anspruch 1, wobei das Polymerisationsreguliermittel unter einer stabilen radikalbildenden Verbindung, einem Atomübertragungs-Radikalpolymerisationsmittel, einem Reversiblen Additions-Fragmentierungs-Kettenübertragungsmittel, einem Iniferter, einer Organotellurverbindung und einer Organoiodverbindung ausgewählt wird.

3. Verfahren zur Herstellung eines Pfropfcopolymers nach Anspruch 1 oder 2, wobei das Polymerisationsreguliermittel Wasser gegenüber inert ist.

4. Verfahren zur Herstellung eines Pfropfcopolymers nach Anspruch 2 oder 3, wobei das Polymerisationsreguliermittel eine Organotellurverbindung umfasst.

5. Verfahren zur Herstellung eines Pfropfcopolymers nach Anspruch 4, wobei das Polymerisationsreguliermittel eine Organotellurverbindung (I) umfasst, die durch eine allgemeine Formel (1) dargestellt ist: 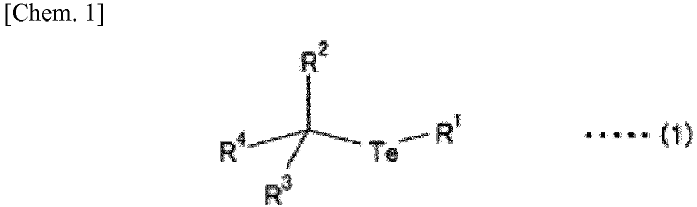 wobei R¹ eine Alkylgruppe, die 1 bis 8 Kohlenstoffatome aufweist, eine Arylgruppe, eine substituierte Arylgruppe oder eine aromatische heterocyclische Gruppe darstellt, R² und R³ jeweils unabhängig ein Wasserstoffatom oder eine Alkylgruppe darstellen, die 1 bis 8 Kohlenstoffatome aufweist, und R⁴ eine Arylgruppe, eine substituierte Arylgruppe, eine aromatische heterocyclische Gruppe, eine Acylgruppe, eine Oxycarbonylgruppe oder eine Cyanogruppe darstellt, und/oder eine Organotellurverbindung (II) umfasst, die durch die allgemeine Formel (2) dargestellt ist:
(R⁵Te)₂ (2)
wobei R⁵ eine Alkylgruppe, die 1 bis 8 Kohlenstoffatome aufweist, eine Arylgruppe, eine substituierte Arylgruppe oder eine aromatische heterocyclische Gruppe darstellt, und zwei R⁵ identisch oder verschieden voneinander sein können.

6. Verfahren zur Herstellung eines Pfropfcopolymers nach einem der Ansprüche 1 bis 5, wobei ein Polymerisationsinitiator zusammen mit dem Polymerisationsreguliermittel verwendet wird.

7. Verfahren zur Herstellung eines Pfropfcopolymers nach einem der Ansprüche 1 bis 6, wobei das radikalpolymerisierbare Monomer, das der lebenden Radikalpfropfpolymerisation unterworfen werden soll, eine Verbindung umfasst, die in einem Molekül davon mindestens eine funktionelle Gruppe aufweist enthaltend mindestens eine Art ausgewählt unter einem Stickstoffatom, einem Sauerstoffatom, einem Schwefelatom, einem Halogenatom und einem Metallatom oder einer aromatischen Vinylverbindung.

8. Verfahren zur Herstellung eines Pfropfcopolymers nach Anspruch 7, wobei die funktionelle Gruppe eine Isocyanatgruppe, eine Thioisocyanatgruppe, eine Aminogruppe, eine Iminogruppe, eine Sulfongruppe, eine Hydroxygruppe, eine Carboxygruppe, eine Thiocarboxygruppe, eine Carbonylgruppe, eine Thiocarbonylgruppe, eine Formylgruppe, eine Thioformylgruppe, eine Silanolgruppe, eine Hydrocarbyloxygruppe, eine Nitrilgruppe, eine Pyridylgruppe, eine Amidgruppe, eine Imidgruppe, eine Imidazolylgruppe, eine Ammoniumgruppe, eine Hydrazogruppe, eine Azogruppe, eine Diazogruppe, eine Ketimingruppe, eine Epoxygruppe, eine Thioepoxygruppe, eine Oxycarbonylgruppe oder eine Esterbindung, eine Carbonylthiogruppe oder eine Thioesterbindung, eine Oxygruppe oder eine Etherbindung, eine Glycidoxygruppe, eine Sulfidgruppe oder eine Thioetherbindung, eine Disulfidgruppe, eine Mercaptogruppe, eine Hydrocarbylthiogruppe, eine Sulfonylgruppe, eine Sulfinylgruppe, einen Iminrest, eine andere stickstoffhaltige heterocyclische Gruppe, eine sauerstoffhaltige heterocyclische Gruppe, eine schwefelhaltige heterocyclische Gruppe, eine Hydrocarbyloxysilylgruppe, eine Organozinngruppe, ein Chloratom oder ein Bromatom umfasst.

9. Verfahren zur Herstellung eines Pfropfcopolymers nach Anspruch 7, wobei die aromatische Vinylverbindung mindestens eine ist ausgewählt aus der Gruppe bestehend aus Styrol, α-Methylstyrol, 1-Vinylnaphthalin, 3-Vinyltoluol, Ethylvinylbenzol, Divinylbenzol, 4-Cyclohexylstyrol, 2,4,6-Trimethylstyrol, p-tert-Butyl-α-methylstyrol und p-tert-Butylstyrol.

10. Verfahren zur Herstellung eines Pfropfcopolymers nach einem der Ansprüche 1 bis 9, wobei eine Pfropfmenge des radikalpolymerisierbaren Monomers 0,1 bis 20 Masse-%, auf die Kautschukkomponente in dem Pfropfcopolymer bezogen, beträgt.

11. Verfahren zur Herstellung eines Pfropfcopolymers nach Anspruch 10, wobei eine Pfropfinenge des radikalpolymerisierbaren Monomers 0,5 bis 10 Masse-%, auf die Kautschukkomponenten in dem Pfropfcopolymer bezogen, beträgt.

12. Verfahren zur Herstellung eines Pfropfcopolymers nach einem der Ansprüche 1 bis 11, wobei die lebende Radikalpfropfpolymerisation in Gegenwart eines Tensids und/oder eines Dispergierhilfsmittels durchgeführt wird.

13. Pfropfpolymerlatex, der durch das Verfahren nach einem der Ansprüche 1 bis 12 erhalten wird.

14. Pfropfcopolymer, das durch Koagulieren und Trocknen des Pfropfcopolymerlatex nach Anspruch 13 erhalten wird.

15. Kautschukzusammensetzung umfassend das Pfropfcopolymer nach Anspruch 14.

16. Kautschukzusammensetzung nach Anspruch 15, umfassend:
(A) eine Kautschukkomponente, die das Pfropfcopolymer enthält; und
(B) Ruß und/oder einen anorganischen Füllstoff in einem Verhältnis von 5 zu 100 Masseteilen, auf 100 Masseteile der Kautschukkomponente bezogen.

17. Kautschukzusammensetzung nach Anspruch 16, ferner ein Silankopplungsmittel in einem Verhältnis von 1 zu 20 Masse-%, auf den anorganischen Füllstoff bezogen, umfassend.

18. Reifen, für den eine Kautschukzusammensetzung nach einem der Ansprüche 15 bis 17 in irgendeinem Reifenteil davon verwendet wird.

## Revendications

1. Procédé pour la production d'un copolymère greffé, le procédé consistant à soumettre un monomère polymérisable par radicaux à une polymérisation avec greffage par radicaux vivante avec un composant de caoutchouc formé d'un caoutchouc naturel dans un milieu aqueux en présence d'un agent de contrôle de polymérisation.

2. Procédé pour la production d'un copolymère greffé selon la revendication 1, dans lequel l'agent de contrôle de polymérisation est choisi parmi un composé formant un radical libre stable, un agent de polymérisation radicalaire par transfert d'atomes, un agent de transfert de chaîne réversible par addition-fragmentation, un iniferter, un composé d'organo-tellure et un composé d'organo-iode.

3. Procédé pour la production d'un copolymère greffé selon la revendication 1 ou 2, dans lequel l'agent de contrôle de polymérisation est inerte à l'eau.

4. Procédé pour la production d'un copolymère greffé selon la revendication 2 ou 3, dans lequel l'agent de contrôle de polymérisation comprend un composé d'organo-tellure.

5. Procédé pour la production d'un copolymère greffé selon la revendication 4, dans lequel l'agent de contrôle de polymérisation comprend un composé d'organo-tellure (I) représenté par une formule générale (1): 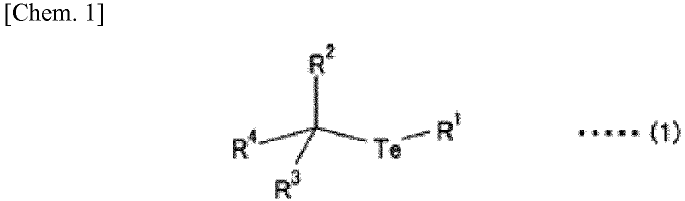 où R¹ représente un groupe alkyle possédant de 1 à 8 atomes de carbone, un groupe aryle, un groupe aryle substitué ou un groupe hétérocyclique aromatique, R² et R³ représentent chacun indépendamment un atome d'hydrogène ou un groupe alkyle possédant de 1 à 8 atomes de carbone et R⁴ représente un groupe aryle, un groupe aryle substitué, un groupe hétérocyclique aromatique, un groupe acyle, un groupe oxycarbonyle ou un groupe cyano et/ou un composé d'organo-tellure (II) représenté par une formule générale (2):
(R⁵Te)₂ (2)
où R⁵ représente un groupe alkyle possédant de 1 à 8 atomes de carbone, un groupe aryle, un groupe aryle substitué ou un groupe hétérocyclique aromatique et deux R⁵ peuvent être identiques ou différents l'un de l'autre.

6. Procédé pour la production d'un copolymère greffé selon l'une quelconque des revendications 1 à 5, dans lequel un initiateur de polymérisation est utilisé accompagné de l'agent de contrôle de polymérisation.

7. Procédé pour la production d'un copolymère greffé selon l'une quelconque des revendications 1 à 6, dans lequel le monomère polymérisable par radicaux devant être soumis à la polymérisation avec greffage par radicaux vivante comprend un composé possédant, dans une molécule de celui-ci, au moins un groupe fonctionnel contenant au moins un type choisi parmi un atome d'azote, un atome d'oxygène, un atome de soufre, un atome d'halogène et un atome métallique ou un composé de vinyle aromatique.

8. Procédé pour la production d'un copolymère greffé selon la revendication 7, dans lequel le groupe fonctionnel comprend un groupe isocyanate, un groupe thioisocyanate, un groupe amino, un groupe imino, un groupe sulfone, un groupe hydroxy, un groupe carboxy, un groupe thiocarboxy, un groupe carbonyle, un groupe thiocarbonyle, un groupe formyle, un groupe thioformyle, un groupe silanol, un groupe hydrocarbyloxy, un groupe nitrile, un groupe pyridyle, un groupe amide, un groupe imide, un groupe imidazolyle, un groupe ammonium, un groupe hydrazo, un groupe azo, un groupe diazo, un groupe kétimine, un groupe époxy, un groupe thioépoxy, un groupe oxycarbonyle ou une liaison ester, un groupe carbonylthio ou une liaison thioester, un groupe oxy ou une liaison éther, un groupe glycidoxy, un groupe sulfure ou une liaison thioéther, un groupe disulfure, un groupe mercapto, un groupe hydrocarbylthio, un groupe sulfonyle, un groupe sulfinyle, un résidu d'imine, un autre groupe hétérocyclique contenant de l'azote, un groupe hétérocyclique contenant de l'oxygène, un groupe hétérocyclique contenant du soufre, un groupe hydrocarbyloxysilyle, un groupe organo-étain, un atome de chlore ou un atome de brome.

9. Procédé pour la production d'un copolymère greffé selon la revendication 7, dans lequel le composé de vinyle aromatique est au moins un choisi dans le groupe constitué de styrène, d'α-méthylstyrène, de 1-vinylnaphtalène, de 3-vinyltoluène, d'éthylvinylbenzène, de divinylbenzène, de 4-cyclohexylstyrène, de 2,4,6-triméthylstyrène, de p-tert-butyl-α-méthylstyrène et de p-tert-butylstyrène.

10. Procédé pour la production d'un copolymère greffé selon l'une quelconque des revendications 1 à 9, dans lequel la proportion de greffe du monomère polymérisable par radicaux est de 0,1 à 20% en masse sur la base du composant de caoutchouc dans le copolymère greffé.

11. Procédé pour la production d'un copolymère greffé selon la revendication 10, dans lequel la proportion de greffe du monomère polymérisable par radicaux est de 0,5 à 10% en masse sur la base du composant de caoutchouc dans le copolymère greffé.

12. Procédé pour la production d'un copolymère greffé selon l'une quelconque des revendications 1 à 11, dans lequel la polymérisation avec greffage par radicaux vivante est effectuée en présence d'un tensioactif et/ou d'un dispersant.

13. Latex de copolymère greffé obtenu par le procédé selon l'une quelconque des revendications 1 à 12.

14. Copolymère greffé obtenu par la coagulation et le séchage du latex de copolymère greffé selon la revendication 13.

15. Composition de caoutchouc, comprenant le copolymère greffé selon la revendication 14.

16. Composition de caoutchouc selon la revendication 15, comprenant:
(A) un composant de caoutchouc contenant le copolymère greffé; et
(B) du noir de carbone et/ou une charge inorganique à un rapport de 5 à 100 parties en masse sur la base de 100 parties en masse du composant de caoutchouc.

17. Composition de caoutchouc selon la revendication 16, comprenant en outre un agent de couplage de silane à un rapport de 1 à 20% en masse sur la base de la charge inorganique.

18. Pneumatique utilisant la composition de caoutchouc selon l'une quelconque des revendications 15 à 17 dans n'importe lequel des éléments de pneumatique de celui-ci.
